(19) Europäisches Patentamt European Patent Office Office européen des brevets

(11) **EP 4 224 893 A1**

(12) **EUROPEAN PATENT APPLICATION**
published in accordance with Art. 153(4) EPC

(43) Date of publication:
**09.08.2023 Bulletin 2023/32**

(51) International Patent Classification (IPC):
**H04W 4/06** (2009.01) **H04W 72/04** (2023.01)

(21) Application number: **21874344.1**

(52) Cooperative Patent Classification (CPC):
**H04W 4/06; H04W 72/04**

(22) Date of filing: **24.09.2021**

(86) International application number:
**PCT/CN2021/120195**

(87) International publication number:
**WO 2022/068683 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 CN 202011057156**

(71) Applicant: **Datang Mobile Communications Equipment Co., Ltd.
Beijing 100085 (CN)**

(72) Inventor: **WANG, Junwei
Beijing 100085 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **BWP CONFIGURATION METHOD AND APPARATUS, AND NETWORK-SIDE DEVICE AND TERMINAL**

(57) The present disclosure discloses a BWP configuration method, device, a network side device and a terminal. The method includes: configuring a first special parameter, a second special parameter and a common parameter for a first BWP; wherein the first special parameter is for transmission of unicast data; the second special parameter is for transmission of broadcast/multicast data, the common parameter is used for the unicast data and the broadcast/multicast data transmission.

configuring a first dedicated parameter, a second dedicated parameter and a common parameter for a first BWP; wherein the first dedicated parameter is used to indicate transmission of unicast data; the second dedicated parameter is used to indicate transmission of broadcast multicast data, the unicast data and the broadcast multicast data share the common parameter

201

**FIG. 2**

**Description**

**CROSS-REFERENCE TO RELATED APPLICATION**

This application claims priorities of the Chinese patent application No. 202011057156.5 filed on September 30, 2020, which are incorporated herein by reference in their entireties.

**TECHNICAL FIELD**

The present disclosure relates to the field of wireless technology, in particular to a Band Width Part (BWP) configuration method, a device, a network side device and a terminal.

**BACKGROUND**

In the current 5G network, the base station sends two types of data, one is data for a specific terminal, which can only be received by a specific terminal, and this data becomes unicast data. The other is the data for all terminals in the cell, which needs to be received by all terminals before they are send as unicast data. Typical data include: system broadcast data. The system broadcast data is the configuration information of the cell, and the terminal can receive the information after completing the cell search.

In the New Radio (NR) design, in order to adapt to the characteristics of the service and support BWP operation, the base station sets a continuous number of Resource Blocks (RBs) for the terminal. The scheduling of the services are within the range of BWP. The configuration of BWP in the related art is generally only applicable to unicast services, but Multicast and Broadcast Service (MBS) is introduced in NR.

**SUMMARY**

The present disclosure aims to provide a BWP configuration method, a device, a network side device and a terminal, so as to solve the problem in the related art that unicast service and MBS are not compatible in the configuration of BWP.

An embodiment of the present disclosure provides a BWP configuration method, applied to a network side device, and including: configuring a first special parameter, a second special parameter and a common parameter for a first BWP; wherein the first special parameter is for transmission of unicast data; the second special parameter is for transmission of broadcast/multicast data, the common parameter is used for the unicast data and the broadcast/multicast data transmission.

In an embodiment of the present disclosure, the first BWP applies for any one of the following: a BWP corresponding to a first control resource set; an initial BWP; or a BWP configured through a high-layer signaling.

In an embodiment of the present disclosure, the configuring a first special parameter, a second special parameter and a common parameter for a first BWP comprises: configuring the first special parameter of the first BWP by a first high-layer signaling; configuring the common parameter of the first BWP through a first broadcast message or a second high-layer signaling; configuring the second special parameter of the first BWP through the first high-layer signaling or the first broadcast message or the second high-layer signaling.

In an embodiment of the present disclosure, the configuring a first special parameter, a second special parameter and a common parameter for a first BWP comprises: configuring the first special parameter of the first BWP through a third high-layer signaling; configuring the common parameter of the first BWP through a second broadcast message or a fourth high-layer signaling; configuring the second special parameter through a third broadcast message or a fifth high-level signaling, wherein the second special parameter is associated with the first BWP; wherein the third broadcast message and the second broadcast message are different broadcast messages; the fifth high-level signaling and the third high-level signaling are different high-level signaling, and the fifth high-level signaling and the fourth high-level signaling are different high-level signaling.

In an embodiment of the present disclosure, the method further includes: sending an association message through the high-level signaling or a medium access control layer control element (MAC CE); wherein the association message is used to associate the second special parameter with the first BWP; the association message includes: an identifier of the first BWP and a configuration identifier corresponding to the second special parameter.

In an embodiment of the present disclosure, the second special parameter includes the configuration identifier corresponding to the second special parameter; a configuration parameter of the first BWP applies for the configuration identifier corresponding to the second special parameter.

In an embodiment of the present disclosure, the second special parameter comprises at least one of the following: a special parameter configuration identifier of broadcast/multicast; a control resource set parameter of broadcast/multicast; a search space parameter of broadcast/multicast; a time domain scheduling parameter of broadcast/multicast; a common resource bandwidth and location of broadcast/multicast; or a common resource identifier of broadcasting multicast.

In an embodiment of the present disclosure, when configuring the search space of the broadcast/multicast, the second special parameter is used for configuring the control resource set of broadcast/multicast, and/or the common parameter is used for configuring the control resource set.

In an embodiment of the present disclosure, when the second special parameter does not configure the control resource set of broadcast/multicast, only the control resource set configured by the common parameter is used for configuring the search space of broadcast/multi cast.

In an embodiment of the present disclosure, the configuration of the common resource bandwidth and location of the broadcast/multicast is configured according to a location and a bandwidth in the initial BWP common parameter, and the bandwidth is greater or smaller than the initial BWP bandwidth.

In an embodiment of the present disclosure, the method further includes: keeping same size of a control signaling of broadcast/multicast with a fallback control signaling of the common search space; or, reducing a number of control signaling lengths of unicast.

In an embodiment of the present disclosure, in the case that the control signaling length of the broadcast/multicast is aligned with the fallback control signaling length of the common search space, the method further comprises: using part of fields of the fallback control signaling to carry part or all of frequency domain scheduling information of the broadcast/multicast.

In an embodiment of the present disclosure, a frequency domain scheduling information length of the broadcast/multicast is greater than a frequency domain scheduling information length in the fallback control signaling.

In an embodiment of the present disclosure, the method further includes: using other fields in the fallback control command other than the part of fields to extend an indication range of the frequency domain scheduling information of the broadcast/multicast.

In an embodiment of the present disclosure, the method further includes: deleting a DCI format corresponding to at least one control signaling length in unicast; or, deleting a DCI format corresponding to the control signaling length of broadcast/multicast, and using a control channel of unicast to schedule the broadcast/multicast data; or, selecting a control signaling length from the reduced numbers of control signaling lengths of unicast to align with the control signaling length of broadcast/multicast; wherein, the selected control signaling length is smaller than the control signaling length of broadcast/multicast.

In an embodiment of the present disclosure, the selecting a control signaling length from the reduced numbers of control signaling lengths of unicast to align with the control signaling length of broadcast/multicast comprises: selecting a control signaling format of unicast closest to the control signaling length of broadcast/multicast, and performing zero padding until the length is the same as the control signaling length of the broadcast/multicast.

An embodiment of the present disclosure provides a BWP configuration method, applied to a terminal, and includes: receiving a first special parameter, a second special parameter and a common parameter configured by a network side device for a first BWP; wherein the first special parameter is for transmission of unicast data; the second special parameter is for transmission of broadcast/multicast data, the common parameter is used for the unicast data and the broadcast/multicast data transmission.

In an embodiment of the present disclosure, the first BWP comprises any one of the following: a BWP corresponding to a first control resource set; an initial BWP; or a BWP configured through a high-layer signaling.

In an embodiment of the present disclosure, the receiving a first special parameter, a second special parameter and a common parameter configured by a network side device for a first BWP comprises: receiving the first special parameter of the first BWP by a first high-layer signaling; receiving the common parameter of the first BWP through a first broadcast message or a second high-layer signaling; receiving the second special parameter of the first BWP through the first high-layer signaling or the first broadcast message or the second high-layer signaling.

In an embodiment of the present disclosure, the receiving a first special parameter, a second special parameter and a common parameter configured by a network side device for a first BWP comprises: receiving the first special parameter of the first BWP through a third high-layer signaling; receiving the common parameter of the first BWP through a second broadcast message or a fourth high-layer signaling;

receiving the second special parameter through a third broadcast message or a fifth high-level signaling, wherein the second special parameter is associated with the first BWP; wherein the third broadcast message and the second broadcast message are different broadcast messages; the fifth high-level signaling and the third high-level signaling are different high-level signaling, and the fifth high-level signaling and the fourth high-level signaling are different high-level signaling.

In an embodiment of the present disclosure, the method further includes: receiving an association message through the high-level signaling or a MAC CE; wherein the association message is used to associate the second special parameter with the first BWP; the association message includes: an identifier of the first BWP and a configuration identifier corresponding to the second special parameter.

In an embodiment of the present disclosure, the second special parameter includes the configuration identifier corresponding to the second special parameter; a configuration parameter of the first BWP applies for the configuration identifier corresponding to the second special parameter.

In an embodiment of the present disclosure, the second special parameter comprises at least one of the following: a special parameter configuration identifier of broadcast/multicast; a control resource set parameter of broadcast/multicast; a search space parameter of broadcast/multicast; a time domain scheduling parameter of broadcast/multicast; a common resource bandwidth and location of broadcast/multicast; or a common resource identifier of broadcasting multicast.

In an embodiment of the present disclosure, the method further includes: keeping same size of a control signaling of broadcast/multicast with a fallback control signaling of the common search space; or, reducing a number of control signaling lengths of unicast.

In an embodiment of the present disclosure, in the case that the control signaling length of the broadcast/multicast is aligned with the fallback control signaling length of the common search space, the method further includes: using part of fields of the fallback control signaling to carry part or all of frequency domain scheduling information of the broadcast/multicast.

In an embodiment of the present disclosure, a frequency domain scheduling information length of the broadcast/multicast is greater than a frequency domain scheduling information length in the fallback control signaling.

In an embodiment of the present disclosure, the method further includes: using other fields in the fallback control command other than the part of fields to extend an indication range of the frequency domain scheduling information of the broadcast/multicast.

In an embodiment of the present disclosure, the method further includes: deleting a DCI format corresponding to at least one control signaling length in unicast; or, deleting a DCI format corresponding to the control signaling length of broadcast/multicast, and using a control channel of unicast to schedule the broadcast/multicast data; or, selecting a control signaling length from the reduced numbers of control signaling lengths of unicast to align with the control signaling length of broadcast/multicast; wherein, the selected control signaling length is smaller than the control signaling length of broadcast/multicast.

In an embodiment of the present disclosure, the selecting a control signaling length from the reduced numbers of control signaling lengths of unicast to align with the control signaling length of broadcast/multicast comprises: selecting a control signaling format of unicast closest to the control signaling length of broadcast/multicast, and performing zero padding until the length is the same as the control signaling length of the broadcast/multicast.

An embodiment of the present disclosure provides a network side device, including a memory, a transceiver, and a processor; the memory is used to store computer programs; the transceiver is used to send and receive data under the control of the processor; the processor is used to read the computer programs in the memory and perform the following operations: configuring a first special parameter, a second special parameter and a common parameter for a first BWP; wherein the first special parameter is for transmission of unicast data; the second special parameter is for transmission of broadcast/multicast data, the common parameter is used for the unicast data and the broadcast/multicast data transmission.

In an embodiment of the present disclosure, the first BWP comprises any one of the following: a BWP corresponding to a first control resource set; an initial BWP; or a BWP configured through a high-layer signaling.

In an embodiment of the present disclosure, the processor is further configured to read the computer program in the memory and perform the following operations: configuring the first special parameter of the first BWP by a first high-layer signaling; configuring the common parameter of the first BWP through a first broadcast message or a second high-layer signaling; configuring the second special parameter of the first BWP through the first high-layer signaling or the first broadcast message or the second high-layer signaling.

In an embodiment of the present disclosure, the processor is further configured to read the computer program in the memory and perform the following operations: configuring the first special parameter of the first BWP through a third high-layer signaling; configuring the common parameter of the first BWP through a second broadcast message or a fourth high-layer signaling; configuring the second special parameter through a third broadcast message or a fifth high-level signaling, wherein the second special parameter is associated with the first BWP; wherein the third broadcast message and the second broadcast message are different broadcast messages; the fifth high-level signaling and the third high-level signaling are different high-level signaling, and the fifth high-level signaling and the fourth high-level signaling are different high-level signaling.

In an embodiment of the present disclosure, the processor is further configured to read the computer program in the memory and perform the following operations: sending an association message through the high-level signaling or a medium access control layer control element (MAC CE); wherein the association message is used to associate the second special parameter with the first BWP; the association message includes: an identifier of the first BWP and a configuration identifier corresponding to the second special parameter.

In an embodiment of the present disclosure, the second special parameter includes a configuration identifier corresponding to the second special parameter; a configuration parameters of the first BWP include configuration identifiers corresponding to the second special parameters.

In an embodiment of the present disclosure, the second special parameter includes at least one of the following: a special parameter configuration identifier of broadcast/multicast; a control resource set parameter of broadcast/multicast; a search space parameter of broadcast/multicast; a time domain scheduling parameter of broadcast/multicast; a common resource bandwidth and location of broadcast/multicast; or a common resource identifier of broadcasting multicast.

In an embodiment of the present disclosure, the processor is further configured to read a computer program in the memory and perform the following operations: keeping same size of a control signaling of broadcast/multicast with a fallback control signaling of the common search space; or, reducing a number of control signaling lengths of unicast.

In an embodiment of the present disclosure, in the case that the length of the control signaling of the broadcast/multicast is aligned with the length of the fallback control signaling of the common search space, the processor is further configured to read the computer program in memory and do the following: using part of fields of the fallback control signaling to carry part or all of frequency domain scheduling information of the broadcast/multicast.

In an embodiment of the present disclosure, the processor is further configured to read the computer program in the memory and perform the following operations: deleting a DCI format corresponding to at least one control signaling length in unicast; or, deleting a DCI format corresponding to the control signaling length of broadcast/multicast, and using a control channel of unicast to schedule the broadcast/multicast data; or, selecting a control signaling length from the reduced numbers of control signaling lengths of unicast to align with the control signaling length of broadcast/multicast; wherein, the selected control signaling length is smaller than the control signaling length of broadcast/multicast.

An embodiment of the present disclosure provide a BWP configuration device, applied to a network side device, and includes: a configuration unit, configured to configure a first special parameter, a second special parameter and a common parameter for a first BWP; wherein the first special parameter is for transmission of unicast data; the second special parameter is for transmission of broadcast/multicast data, the common parameter is used for the unicast data and the broadcast/multicast data transmission.

An embodiment of the present disclosure provides a terminal, including a memory, a transceiver, and a processor; the memory is used to store computer programs; the transceiver is used to send and receive data under the control of the processor; the processor is used to read the computer programs in the memory and perform the following operations: receiving a first special parameter, a second special parameter and a common parameter configured by a network side device for a first BWP; wherein the first special parameter is for transmission of unicast data; the second special parameter is for transmission of broadcast/multicast data, the common parameter is used for the unicast data and the broadcast/multicast data transmission.

In an embodiment of the present disclosure, the first BWP comprises any one of the following: a BWP corresponding to a first control resource set; an initial BWP; or a BWP configured through a high-layer signaling.

In an embodiment of the present disclosure, the processor is further configured to read the computer program in the memory and perform the following operations: receiving the first special parameter of the first BWP by a first high-layer signaling; receiving the common parameter of the first BWP through a first broadcast message or a second high-layer signaling; receiving the second special parameter of the first BWP through the first high-layer signaling or the first broadcast message or the second high-layer signaling.

In an embodiment of the present disclosure, the processor is further configured to read the computer program in the memory and perform the following operations: receiving the first special parameter of the first BWP through a third high-layer signaling; receiving the common parameter of the first BWP through a second broadcast message or a fourth high-layer signaling; receiving the second special parameter through a third broadcast message or a fifth high-level signaling, wherein the second special parameter is associated with the first BWP; wherein the third broadcast message and the second broadcast message are different broadcast messages; the fifth high-level signaling and the third high-level signaling are different high-level signaling, and the fifth high-level signaling and the fourth high-level signaling are different high-level signaling.

In an embodiment of the present disclosure, the processor is further configured to read the computer program in the memory and perform the following operations: receiving an association message through the high-level signaling or a MAC CE; wherein the association message is used to associate the second special parameter with the first BWP; the association message includes: an identifier of the first BWP and a configuration identifier corresponding to the second special parameter.

In an embodiment of the present disclosure, the second special parameter includes a configuration identifier corresponding to the second special parameter; a configuration parameters of the first BWP include configuration identifiers corresponding to the second special parameters.

In an embodiment of the present disclosure, the second special parameter comprises at least one of the following: a special parameter configuration identifier of broadcast/multicast; a control resource set parameter of broadcast/multicast; a search space parameter of broadcast/multicast; a time domain scheduling parameter of broadcast/multicast; a common resource bandwidth and location of broadcast/multicast; or a common resource identifier of broadcasting multicast.

In an embodiment of the present disclosure, the processor is further configured to read a computer program in the memory and perform the following operations: keeping same size of a control signaling of broadcast/multicast with a fallback control signaling of the common search space; or, reducing a number of control signaling lengths of unicast.

In an embodiment of the present disclosure, in the case where the control signaling length of the broadcast/multicast is aligned with the fallback control signaling length of the common search space, the processor is further configured to read the memory computer program in and do the following: using part of fields of the fallback control signaling to carry part or all of frequency domain scheduling information of the broadcast/multicast.

In an embodiment of the present disclosure, the processor is further configured to read the computer program in the memory and perform the following operations: deleting a DCI format corresponding to at least one control signaling length in unicast; or, deleting a DCI format corresponding to the control signaling length of broadcast/multicast, and using a control channel of unicast to schedule the broadcast/multicast data; or, selecting a control signaling length from the reduced numbers of control signaling lengths of unicast to align with the control signaling length of broadcast/multicast; wherein, the selected control signaling length is smaller than the control signaling length of broadcast/multicast.

An embodiment of the present disclosure provides a BWP configuration device, applied to a terminal, comprising: a configuration receiving unit, configured to receive a first special parameter, a second special parameter, and a common parameter configured by a network side device for a first BWP; wherein the first special parameter is for transmission of unicast data; the second special parameter is for transmission of broadcast/multicast data, the common parameter is used for the unicast data and the broadcast/multicast data transmission.

An embodiment of the present disclosure provides a processor-readable storage medium, storing a computer program, wherein the computer program is executed by the processor to implement the steps of the BWP configuration method.

The above-mentioned technical solution of the present disclosure has at least the following beneficial effects:

In the BWP configuration method, device, network ide device and terminal of the embodiments of the present disclosure, the network configures a first BWP that supports unicast data and broadcast/multicast data transmission, and the first BWP applies for the common parameter, the first special parameter special to unicast data and the second special parameter special to broadcast/multicast data, which enable the terminal to receive the MBS service without increasing the receiving capability of the terminal, thereby improving user experience.

## BRIEF DESCRIPTION OF THE DRAWINGS

FIG. 1 shows a block diagram of a wireless communication system according to an embodiment of the present disclosure;

FIG. 2 shows a schematic diagram of the steps of the BWP configuration method provided by the embodiment of the present disclosure;

FIG. 3 shows another schematic diagram of the steps of the BWP configuration method provided by the embodiment of the present disclosure;

FIG. 4 shows a schematic diagram of the bandwidth and location of common resources of MBS in the second special parameter in the BWP configuration method provided by the embodiment of the present disclosure;

FIG. 5 shows a schematic structural diagram of a network side device provided by an embodiment of the present disclosure;

FIG. 6 shows a schematic structural diagrams of the BWP configuration device provided by the embodiment of the present disclosure;

FIG. 7 shows a schematic structural diagram of a terminal provided by an embodiment of the present disclosure;

FIG. 8 shows another schematic structural diagram of a BWP configuration device provided by an embodiment of the present disclosure.

## DETAILED DESCRIPTION

In order to make the technical problems, technical solutions and advantages to be solved by the present disclosure clearer, the following will describe in detail with reference to the drawings and specific embodiments.

For MBS transmission, generally a common frequency domain resource is defined to form a single BWP.

Since MBS data scheduling is sent to all terminals or to a group of terminals in the cell, the range of scheduling resources is the same for receiving terminals, that is, a common frequency domain resource needs to be defined, and this common frequency domain resource forms a MBS BWP, the width of the frequency domain resource (that is, the number of RBs included therein) does not exceed the radio frequency receiving width of the terminal. However, defining a common frequency domain resource separately to form a BWP of an MBS has the following problems: 1) increasing the implementation complexity of the terminal, or increasing the cost of the terminal; 2) increasing the delay of receiving MBS or unicast. However, the current BWP configuration is only for unicast services, or only for MBS, and unicast services and MBS cannot be compatible.

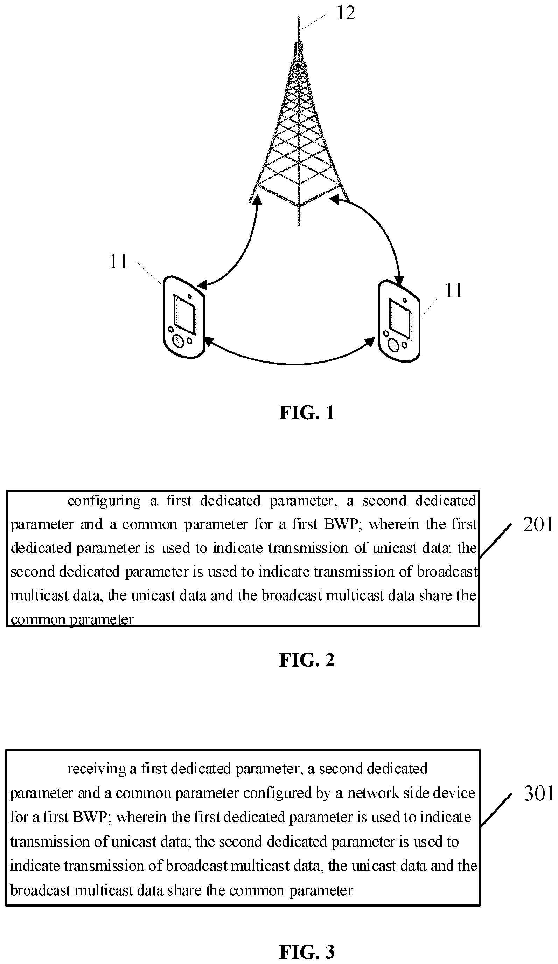

FIG. 1 shows a block diagram of a wireless communication system according to an embodiment of the present disclosure. The wireless communication system includes a terminal device 11 and a network side device 12. Wherein, the terminal device 11 may also be called a terminal or User Equipment (UE). It should be noted that, the embodiment of the present application does not limit the specific type of the terminal 11. The network side device 12 may be a base station or a core network. It should be noted that in the embodiment of the present application, only the base station in the NR system is taken as an example, but the specific type of the base station is not limited.

The term "and/or" in the embodiments of the present disclosure describes the association relationship of associated objects, indicating that there may be three relationships, for example, A and/or B, which may mean: A alone, both A and B, and B alone. The character "j" generally indicates that the contextual objects are an "or" relationship.

The term "a plurality of" in the embodiments of the present application refers to two or more, and other quantifiers are similar.

The technical solutions in the embodiments of the present application will be clearly and completely described below in conjunction with the accompanying drawings in the embodiments of the present application. Obviously, the described embodiments are only some of the embodiments of the present disclosure, not all of them. Based on the embodiments in this disclosure, all other embodiments obtained by persons of ordinary skill in the art without making creative efforts belong to the scope of protection of this application.

The technical solutions provided by the embodiments of the present application can be applied to various systems, especially 5G systems. For example, the applicable system may be Global System of Mobile communication (GSM) system, Code Division Multiple Access (CDMA) system, Wideband Code Division Multiple Access (WCDMA) general packet Wireless business (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. These various systems include terminal devices and network devices. The system may also include a core network part, such as an evolved packet system (EPS), a 5G system (5GS), and the like.

The terminal device involved in this embodiment of the present application may be a device that provides voice and/or data connectivity to a user, a handheld device with a wireless connection function, or other processing devices connected to a wireless modem. In different systems, the name of the terminal device may be different. For example, in a 5G system, the terminal device may be called UE. Wireless terminal device can communicate with one or more core networks (CN) via a radio access network (RAN). The wireless terminal device can be a mobile terminal device, such as a mobile phone (or called a "cellular "telephones) and computers with mobile terminal device, such as portable, pocket, hand-held, computer built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistant (PDA) and other devices. Wireless terminal device can also be called system, subscriber unit, subscriber station, mobile station, mobile station, remote station, access point, a remote terminal, an access terminal, a user terminal, a user agent, and a user device, which are not limited in this embodiment of the present application.

The network side device involved in this embodiment of the present application may be a base station, and the base station may include multiple cells that provide services for terminals. Depending on the specific application, the base station can also be called an access point, or it can be a device in the access network that communicates with the wireless terminal device through one or more sectors on the air interface, or other names. Network devices can be used to interchange received over-the-air frames with Internet Protocol (IP) packets and act as routers between wireless terminal devices and the rest of the access network, which can include the Internet Protocol (IP) communication network. Network devices may also coordinate attribute management for the air interface. For example, the network device involved in this embodiment of the present application may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolved network device in a Long Term Evolution (LTE) system (evolutional Node B, eNB or e-NodeB), 5G base station (gNB) in the 5G network architecture (the next generation system), can also be a home evolved base station (HeNB), relay node, a home base station (femto), a pico base station (pico), etc., which are not limited in this embodiment of the present disclosure. In some network structures, a network device may include a centralized unit (CU) node and a distributed unit (DU) node, and the centralized unit and the distributed unit may also be arranged geographically separately.

One or more antennas can be used between the network side device and the terminal device for Multi Input Multi Output (MIMO) transmission. MIMO transmission can be Single User MIMO (SU-MIMO) or multi-user MIMO (MU-MIMO). According to the shape and number of antenna combinations, MIMO transmission can be 2D-MIMO, 3D-MIMO, FD-MIMO, or massive-MIMO, or diversity transmission, precoding transmission, or beamforming transmission, etc.

As shown in FIG. 2, the embodiment of the present disclosure provides a bandwidth part (BWP) configuration method, which is applied to a network side device, including:

Step 201, configuring a first special parameter, a second special parameter and a common parameter for a first BWP; wherein, the common parameter is used for unicast data and broadcast/multicast data transmission; the first special parameter is for transmission of the unicast data; the second special parameter is for transmission of the broadcast/multicast data.

In the embodiment of the present disclosure, the first BWP can transmit Physical Downlink Shared Channel (PDSCH) data of MBS, and can also transmit PDSCH data of unicast. The unicast data generally refers to currently supported PDSCH data other than MBS data. For example, unicast data is:

Terminal-based user service data with PDCCH scrambled by Cell Radio Network Temporary Identifier (C-RNTI)/CS-RNTI/MCS-RNTI/RA-RNTI/TC-RNTI;
Paging data and system message data with PDCCH scrambled by P-RNTI/SI-RNTI.

As an optional embodiment, the first BWP applies for any one of the following:

BWP corresponding to a first control resource set (for example, COREST#0, the control resource set numbered 0);
Initial BWP; for example, a BWP defined by the base station through a broadcast message is a BWP used by the terminal to replace CORESET#0 after the random access is completed;
BWP configured through high-layer signaling, such as a first activated BWP, a default BWP, etc. When the terminal is connected, the base station configures multiple BWPs through RRC. For the primary cell, the first activated BWP is defined as an activated BWP through the RRC configuration; for the secondary cell, the first activated BWP is defined as BWP that is activated by default when the cell activates a certain BWP. When the activated BWPs between the terminal and the base station do not match (for example, the base station sends a BWP switching command, but the terminal does not receive the same), both the terminal and the base station both switch to the default BWP to send and receive data.

As an optional embodiment, the common parameters include at least one of the following:

Time domain scheduling parameters shared by unicast and broadcast/multicast;
Frequency domain location and bandwidth shared by unicast and broadcast/multicast;
Control resource set parameters shared by unicast and broadcast/multicast;
an identifier of the first BWP;
subcarrier spacing of the first BWP.

As another optional embodiment, the first special parameter includes at least one of the following:

Time domain scheduling parameters of unicast;
search space parameters of unicast;
control resource set parameters of unicast;
resource bandwidth and location of unicast;
a resource identifier of unicast.

As another optional embodiment, the second special parameter includes at least one of the following:

Special parameter configuration identifier of broadcast/multicast;
Control resource set parameters of broadcast/multicast;
Search space parameters of broadcast/multicast;
Time domain scheduling parameters of broadcast/multicast;
Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

The embodiment of the present disclosure provides two configuration modes of the first special parameter, the second special parameter and the common parameter.

Among them, the first mode is: adding a second special parameter in the BWP framework in the related art, that is, step 201 includes:

Configuring first special parameter of the first BWP by a first high-layer signaling;
Configuring the common parameter of the first BWP through a first broadcast message or a second high-layer signaling;
Configuring the second special parameter of the first BWP through the first high-layer signaling or the first broadcast message or the second high-layer signaling.

In this mode, the second special parameter is directly added to the BWP framework in the related art, and the configuration can be completed in one step. When the first BWP is configured exclusively for terminals by high-layer signaling (for example, the first high-layer signaling or the second high-layer signaling), the second special parameter needs to be sent once for each terminal.

Wherein, the second mode is: separately configuring the second special parameter, and then associating the second special parameter with the first BWP, that is, step 201 includes:

Configuring the first special parameter of the first BWP through a third high-layer signaling;
Configuring the common parameters of the first BWP through a second broadcast message or a fourth high-layer signaling;
Configuring the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

Correspondingly, the method also includes:
Sending an association message through high-level signaling or a medium access control layer control element (MAC CE); wherein the association message is used to associate the second special parameter with the first BWP; the association message includes: an identifier of the first BWP and a the configuration identifier corresponding to the second special parameter.

Alternatively, the second special parameter includes the configuration identifier corresponding to the second special parameter; the configuration parameter of the first BWP applies for the configuration identifier corresponding to the second special parameter; the second special parameter carrying a configuration identifier corresponding to the same second special parameter is associated with the first BWP.

In this mode, since the second special parameter of broadcast/multicast is common content of multiple terminals, the configuration of the second special parameter by unicast can be sent through a broadcast message once, and the configuration efficiency is high.

Optionally, the configuration identifier corresponding to the second special parameter may be: a special parameter configuration identifier of broadcast/multicast included in the second special parameter.

As an optional embodiment of the present disclosure, considering the cost of terminal implementation, it is stipulated that within one detection period (such as in one slot), when the terminal detects the candidate PDCCH, there is a certain limit on the number of the lengths of the control signaling on the PDCCH (for example, in a cell, the number of different control signaling lengths configured based on C-RNTI cannot exceed 3, and the number of all different control signaling lengths cannot exceed 4). Embodiments of the present disclosure also provide a method for reducing the length of control signaling when the number of different control signaling lengths exceeds the capability of the terminal, which not only supports flexible scheduling of network side device, but also maintains the detection capability of the current physical downlink control channel (PDCCH).

Among them, within a detection period of the control channel, if the sum of the number of different control signaling lengths of unicast and the number of different control signaling lengths of broadcast/multicast is greater than a first threshold, the control signaling length (DCI size) is reduced by method 1: the length of the control signaling of the broadcast/multicast is aligned with the length of the fallback control signaling of the common search space.

In the case that the control signaling length of the broadcast/multicast is aligned with the fallback control signaling length of the common search space, the method further includes:

Using part of fields of the fallback control signaling to carry part or all of the frequency domain scheduling information of the broadcast/multicast.

Wherein, the frequency domain scheduling information length of the broadcast/multicast is greater than the frequency domain scheduling information length in the fallback control signaling.

Wherein, the method also includes:

Using other fields in the fallback control command other than the part of fields to extend an indication range of the frequency domain scheduling information of the broadcast/multicast.

The above-mentioned fallback control signaling is a scheduling signaling for receiving common messages such as system messages and paging messages sent by the base station, and may refer to format 1_0 in the 5G system.

It should be noted that the first reduction method does not need a threshold as a condition, that is, regardless of whether it is greater than the threshold, the first method can be used directly, which can reduce the determination process of the terminal and the base station.

This reduction method simplifies the process of length alignment of control signaling, and can schedule larger frequency domain bandwidth of broadcast/multicast.

Or, within a detection period of the control channel, if the sum of the number of different control signaling lengths of unicast and the number of different control signaling lengths of broadcast/multicast is greater than the first threshold, the control signaling length (DCI size) is reduced by method 2: reducing the number of the control signaling lengths of unicast.

Wherein, the mode of reducing the length of the control signaling of unicast is the same as that in related art. For example, the DCI formats corresponding to the control signaling length of unicast include: format 0_0, format 1_0, format 0_0, format 1_0, format 0_2, format 1_2, format 0_1, format 1_1. By adjusting the frequency-domain allocation indication bits of the terminal-specific search space (USS), the number of bits of the frequency-domain scheduling indication of the common search space and the terminal-specific search space is the same, that is, the DCI sizes of format 0_0, format 1_0, format 0_0, and format 1_0 are the same. The long DCI is aligned by zero-padding the short-length DCI, so that the DCI sizes of format 0_2 and format 1_2 are the same. The long DCI is aligned by zero-padding the short-length DCI, so that the DCI sizes of format 0_1 and format 1_1 are the same.

If the reduced sum of the number of different control signaling lengths of unicast and the number of different control signaling lengths of broadcast/multicast is less than the first threshold, the length reduction of control signaling is completed. If the reduced sum of the number of different control signaling lengths of unicast and the number of different control signaling lengths of broadcast/multicast is greater than the first threshold, the method further includes:

Deleting DCI format corresponding to at least one control signaling length in unicast; for example, deleting the DCI size of format 0_2/format 1_2 or the DCI size of format0_1/format1_1, and retaining the DCI size of broadcast/multicast. (That is, the PDCCH of format 0_2/1_2 or format0_1 /format1_1 is not detected, and the PDCCH of MBS is detected);
or,

Deleting the DCI format corresponding to the control signaling length of broadcast/multicast, and using the unicast control channel to schedule the broadcast/multicast data; for the terminal, the broadcast/multicast data service is changed from the G-RNTI scheduling mechanism of the group to the C-RNTI scheduling of the terminal;
or,

Selecting a control signaling length from the reduced control signaling length of unicast to align with the control signaling length of broadcast/multicast; wherein, the selected control signaling length is smaller than the control signaling length of broadcast/multicast. For example, selecting the control signaling format of unicast closest to the control signaling length of the broadcast/multicast, and performing zero padding until the length is the same as that of the control signaling of broadcast/multicast. If the reduced control signaling length of the unicast is greater than the length of the control signaling of the broadcast/multicast, reducing the number of the control signal lengths by deleting the DCI format corresponding to at least one control signaling length in unicast or deleting the DCI format corresponding to the control signaling length of broadcast/multicast.

In some embodiments, the selecting a control signaling length from the reduced control signaling length of unicast to align with the control signaling length of broadcast/multicast includes:

Selecting the control signaling format of unicast closest to the control signaling length of broadcast/multicast, and performing zero padding until the length is the same as the control signaling length of the broadcast/multicast.

To sum up, in the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

As shown in FIG. 3, the embodiment of the present disclosure also provides a BWP configuration method, which is applied to a terminal, including:

Step 301, receiving a first special parameter, a second special parameter and a common parameter configured by a network side device for a first BWP; wherein the common parameter is used for the unicast data and the broadcast/multicast data transmission; the first special parameter is for transmission of unicast data; the second special parameter is for transmission of broadcast/multicast data.

In the embodiment of the present disclosure, the first BWP can transmit PDSCH data of a broadcast/multicast service, and can also transmit PDSCH data of unicast. The unicast data generally refers to currently supported PDSCH data other than broadcast/multicast service data. For example, unicast data is:

Terminal-based user service data with PDCCH scrambled by Cell Radio Network Temporary Identifier (C-RNTI)/CS-RNTI/MCS-RNTI/RA-RNTI/TC-RNTI;
Paging data and system message data with PDCCH scrambled by P-RNTI/SI-RNTI.

As an optional embodiment, the first BWP applies for any one of the following:

BWP corresponding to a first control resource set (for example, COREST#0, the control resource set numbered 0);
Initial BWP; for example, a BWP defined by the base station through a broadcast message is a BWP used by the terminal to replace CORESET#0 after the random access is completed;
BWP configured through high-layer signaling, such as a first activated BWP, a default BWP, etc. When the terminal is connected, the base station configures multiple BWPs through RRC. For the primary cell, the first activated BWP is defined as an activated BWP through the RRC configuration; for the secondary cell, the first activated BWP is defined as BWP that is activated by default when the cell activates a certain BWP. When the activated BWPs between the terminal and the base station do not match (for example, the base station sends a BWP switching command, but the terminal does not receive the same), both the terminal and the base station both switch to the default BWP to send and receive data.

As an optional embodiment, the common parameters include at least one of the following:

Time domain scheduling parameters shared by unicast and broadcast/multicast;
Frequency domain location and bandwidth shared by unicast and broadcast/multicast;
Control resource set parameters shared by unicast and broadcast/multicast;
an identifier of the first BWP;
subcarrier spacing of the first BWP.

As another optional embodiment, the first special parameter includes at least one of the following:

Time domain scheduling parameters of unicast;
search space parameters of unicast;
control resource set parameters of unicast;
resource bandwidth and location of unicast;
a resource identifier of unicast.

As another optional embodiment, the second special parameter includes at least one of the following:

Special parameter configuration identifier of broadcast/multicast;
Control resource set parameters of broadcast/multicast;
Search space parameters of broadcast/multicast;
Time domain scheduling parameters of broadcast/multicast;
Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

The embodiment of the present disclosure provides two configuration modes of the first special parameter, the second special parameter and the common parameter.

Among them, the first mode is: adding a second special parameter in the BWP framework in the related art, that is, step 301 includes:

receiving first special parameter of the first BWP by a first high-layer signaling;
receiving the common parameter of the first BWP through a first broadcast message or a second high-layer signaling;
receiving the second special parameter of the first BWP through the first high-layer signaling or the first broadcast message or the second high-layer signaling.

In this mode, the second special parameter is directly added to the BWP framework in the related art, and the configuration can be completed in one step. When the first BWP is configured exclusively for terminals by high-layer signaling (for example, the first high-layer signaling or the second high-layer signaling), the second special parameter needs to be sent once for each terminal.

Wherein, the second mode is: separately configuring the second special parameter, and then associating the second special parameter with the first BWP, that is, step 301 includes:

receiving the first special parameter of the first BWP through a third high-layer signaling;
receiving the common parameters of the first BWP through a second broadcast message or a fourth high-layer signaling;
receiving the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

Correspondingly, the method also includes:
receiving an association message through high-level signaling or a medium access control layer control element (MAC CE); wherein the association message is used to associate the second special parameter with the first BWP; the association message includes: an identifier of the first BWP and a the configuration identifier corresponding to the second special parameter.

Alternatively, the second special parameter includes the configuration identifier corresponding to the second special parameter; the configuration parameter of the first BWP applies for the configuration identifier corresponding to the second special parameter; the second special parameter carrying a configuration identifier corresponding to the same second special parameter is associated with the first BWP.

In this mode, since the second special parameter of broadcast/multicast is common content of multiple terminals, the configuration of the second special parameter by unicast can be sent through a broadcast message once, and the configuration efficiency is high.

As an optional embodiment of the present disclosure, considering the cost of terminal implementation, it is stipulated that within one detection period (such as in one slot), when the terminal detects the candidate PDCCH, there is a certain limit on the number of the lengths of the control signaling on the PDCCH (for example, in a cell, the number of different control signaling lengths configured based on C-RNTI cannot exceed 3, and the number of all different control signaling lengths cannot exceed 4). Embodiments of the present disclosure also provide a method for reducing the length of control signaling when the number of different control signaling lengths exceeds the capability of the terminal, which not only supports flexible scheduling of network side device, but also maintains the detection capability of the current physical downlink control channel (PDCCH).

Among them, within a detection period of the control channel, if the sum of the number of different control signaling lengths of unicast and the number of different control signaling lengths of broadcast/multicast is greater than a first threshold, the control signaling length (DCI size) is reduced by method 1: the length of the control signaling of the broadcast/multicast is aligned with the length of the fallback control signaling of the common search space.

In the case that the control signaling length of the broadcast/multicast is aligned with the fallback control signaling length of the common search space, the method further includes:

Using part of fields of the fallback control signaling to carry part or all of the frequency domain scheduling information of the broadcast/multicast.

Wherein, the frequency domain scheduling information length of the broadcast/multicast is greater than the frequency domain scheduling information length in the fallback control signaling.

In some embodiments of the present disclosure, other fields in the fallback control command other than the part of fields are used to extend an indication range of the frequency domain scheduling information of the broadcast/multicast.

The above-mentioned fallback control signaling is a scheduling signaling for receiving common messages such as system messages and paging messages sent by the base station, and may refer to format 1_0 in the 5G system.

It should be noted that the first reduction method does not need a threshold as a condition, that is, regardless of whether it is greater than the threshold, the first method can be used directly, which can reduce the determination process of the terminal and the base station.

This reduction method simplifies the process of length alignment of control signaling, and can schedule larger frequency domain bandwidth of broadcast/multicast.

Or, within a detection period of the control channel, if the sum of the number of different control signaling lengths of unicast and the number of different control signaling lengths of broadcast/multicast is greater than the first threshold, the control signaling length (DCI size) is reduced by method 2: reducing the number of the control signaling lengths of unicast.

Wherein, the mode of reducing the length of the control signaling of unicast is the same as that in related art. For example, the DCI formats corresponding to the control signaling length of unicast include: format 0_0, format 1_0, format 0_0, format 1_0, format 0_2, format 1_2, format 0_1, format 1_1. By adjusting the frequency-domain allocation indication bits of the terminal-specific search space (USS), the number of bits of the frequency-domain scheduling indication of the common search space and the terminal-specific search space is the same, that is, the DCI sizes of format 0_0, format 1_0, format 0_0, and format 1_0 are the same. The long DCI is aligned by zero-padding the short-length DCI, so that the DCI sizes of format 0_2 and format 1_2 are the same. The long DCI is aligned by zero-padding the short-length DCI, so that the DCI sizes of format 0_1 and format 1_1 are the same.

If the reduced sum of the number of different control signaling lengths of unicast and the number of different control signaling lengths of broadcast/multicast is less than the first threshold, the length reduction of control signaling is completed. If the reduced sum of the number of different control signaling lengths of unicast and the number of different control signaling lengths of broadcast/multicast is greater than the first threshold, the method further includes:

Deleting DCI format corresponding to at least one control signaling length in unicast; for example, deleting the DCI size of format 0_2/format 1_2 or the DCI size of format0_1/format1_1, and retaining the DCI size of broadcast/multicast. (That is, the PDCCH of format 0_2/1_2 or format0_1 /format1_1 is not detected, and the PDCCH of MBS is detected);
or,
Deleting the DCI format corresponding to the control signaling length of broadcast/multicast, and using the unicast control channel to schedule the broadcast/multicast data; for the terminal, the broadcast/multicast data service is changed from the G-RNTI scheduling mechanism of the group to the C-RNTI scheduling of the terminal;
or,
Selecting a control signaling length from the reduced control signaling length of unicast to align with the control signaling length of broadcast/multicast; wherein, the selected control signaling length is smaller than the control signaling length of broadcast/multicast. For example, selecting the control signaling format of unicast closest to the control signaling length of the broadcast/multicast, and performing zero padding until the length is the same as that of the control signaling of broadcast/multicast. If the reduced control signaling length of the unicast is greater than the length of the control signaling of the broadcast/multicast, reducing the number of the control signal lengths by deleting the DCI format corresponding to at least one control signaling length in unicast or deleting the DCI format corresponding to the control signaling length of broadcast/multicast.

Following the above example, after reducing the control signaling length, the method further includes:
Detecting, by the terminal, the PDCCH, and indicating to receive broadcast/multicast data or unicast data according to the downlink control information (DCI).

For example, the terminal continues PDCCH blind detection and DCI content analysis on the candidate PDCCH to be detected according to the DCI format type and DCI size length, receives the PDSCH according to the analysis result, and feeds back the HARQ-ACK. In particular, on the terminal side, different configuration parameters are required to receive broadcast, multicast and unicast PDSCH, and it takes a certain amount of time for the terminal to execute, which will affect the feedback time of HARQ-ACK. For example: when the parameter configuring PDSCH is 1 symbol, the minimum feedback delay of the HARQ-ACK needs to be delayed by 1 symbol. Especially when PDCCH and PDSCH are in one slot.

To sum up, in the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

In order to more clearly describe the BWP configuration method provided by the embodiments of the present disclosure, the following describes in detail with reference to several examples.

Example 1, the first BWP is the initial BWP

Step 1, configuring the first special parameter, the second special parameter and the common parameter of the first BWP.

A1: In the broadcast message, configuring the common parameter of the initial BWP.

The configuration of the common parameter of the initial BWP is implemented by broadcasting the common parameter in the cell through the broadcast channel, and analyzing the relevant configuration parameters for a terminal being interested in the MBS service. The common parameter include at least one of the following:

BWP ID: identifying the configured BWP identification number, the initial BWP number is the default number of the base station, such as ID=0;

Subcarrier spacing SCS: the value is one of 15KHz, 30KHz, 60KHz, 120KHz, 240KHz, 480KHz, 960KHz;

Cyclic Prefix (CP) type: setting to extended CP or normal CP;

BWP width and location indication (locationAndBandwidth): the parameter includes the starting location $RB_{start}$ and length $N_{BWP}^{size}$ (number of RBs); the maximum value of locationAndBandwidth is calculated according to the maximum number of RBs supported by each carrier (for example: the carrier supports up to 275RB) , that is the number of combination types of $RB_{start}$ and length $N_{BWP}^{size}$ is 275*(275+1)/2= 37950, and the value range of locationAndBandwidth is (0..37949); it means that the number of digits of the value information is 16bit. For example: configuring the initial RB position of the initial BWP $RB_{start}$ = 50, and the frequency domain width of initial BWP is $N_{BWP}^{size} = 100$ .

Control resource set: A resource set for unicast and broadcast/multicast control channels, including the number of symbols occupied by PDCCH (1, 2 or 3), frequency domain bandwidth, control resource ID (identification number), etc.

A2: In the broadcast message or high-layer signaling (such as RRC message), configuring the second special parameter special to MBS;

The special parameter configuration of MBS is broadcast in the cell through the broadcast channel. For terminals being interested in the MBS service, the relevant configuration parameters are analyzed, mainly including at least one of the following:

Control resource set: the resource set for indicating the MBS control channel, including the number of symbols occupied by PDCCH, frequency domain bandwidth, control resource ID (identification number), etc.; the content of this field is optional (the base station may configure or not configure the same).

Search space: for indicating the detection timing of MBS control channel, indicating the time at which the terminal detects the MBS PDCCH, and the resource set size of the PDCCH is indicated by the control resource ID (identification number). When the base station does not configured the control resource set special for MBS, the control channel resource set configured in the BWP common parameters is used.

Time domain scheduling parameter: the time domain scheduling parameter is used for data scheduling of the PDSCH as a parameter, and indicates the time domain position in the time-domain of the scheduled PDSCH, including: a starting position and a length. The start position includes the slot start position (k0), the symbol start position (S) and the data length (L) after receiving the PDCCH.

MBS common resource bandwidth and location: the maximum bandwidth of the parameter used for MBS scheduling. Its definition method can use one of the following:

Method 1: Configure according to the method of configuring locationAndBandwidth in the initial BWP common parameters that is, calculating according to the maximum 275RB. The combination types of $RB_{start}$ and length $N_{BWP}^{size}$ are: 275*(275+1)/2= 37950; that is, the range of locationAndBandwidth is (0..37949). It is represented by a parameter with a length of 16 bits. The advantage of this method is that the configuration parameters of the common frequency domain resources of the MBS are flexible, and can be larger or smaller than the value of the initial BWP bandwidth.
Method 2: Indicate the frequency domain range according to the bandwidth configured in the initial BWP as the maximum value. For example: Assume that the initial BWP bandwidth configured in the previous step is the initial RB position of the initial BWP configuration $RB_{start}$ = 50, and the initial BWP frequency domain width $N_{BWP}^{size} = 100$

; then the number of combination types of the common frequency domain bandwidth $RB_{start}$ and length $N_{BWP}^{size}$ of the MBS configuration is: 100*(100+ 1)/2=5050; that is, it is represented by a number with a length of 13 bits. $RB_{start}$ calculated by this value is the offset relative to the starting position of the initial BWP bandwidth, $N_{BWP}^{size}$ is the frequency domain width. This method can save information overhead.

A3: Configuring the first special parameter special to unicast through high-layer signaling (such as an RRC message).

For unicast special parameter configuration, the parsing of relevant configuration parameters through RRC messages mainly includes at least one of the following:
Control resource set: for indicating the resource set of the unicast control channel, including the number of symbols occupied by PDCCH, frequency domain bandwidth, control resource ID (identification number), etc.

Search space: for indicating the detection timing of unicast control channel, and indicating at which time the terminal performs unicast PDCCH detection, and the resource set size of the PDCCH is indicated by the control resource ID (identification number).

Time domain scheduling parameter: the time domain scheduling parameter is used for data scheduling of the PDSCH as a parameter, and indicates the time domain position in the time-domain of the scheduled PDSCH, including: a starting position and a length. The start position includes the slot start position (k0), the symbol start position (S) and the data length (L) after receiving the PDCCH.

The above A1/A2 can be implemented by the following message:
The downlink common configuration message is sent to the terminal on the broadcast channel, including at least the following two messages:

the common parameter message configuring the initial BWP (initialDownlinkBWP);
special parameter message for configuring MBS (BWP-DownlinkSpecial). Among them, the special parameter message for configuring MBS includes the following message:

The common frequency domain resource parameter of MBS (locationAndBandwidth, the value range is (0..37949), or (0... $(N_{init\_BWP}^{size} * (N_{init\_BWP}^{size} + 1) / 2) - 1$), the above $N_{init\_BWP}^{size}$ refers to the initial BWP bandwidth;
PDCCH control channel parameters configuring the MBS;
PDSCH data channel parameters configuring the MBS.

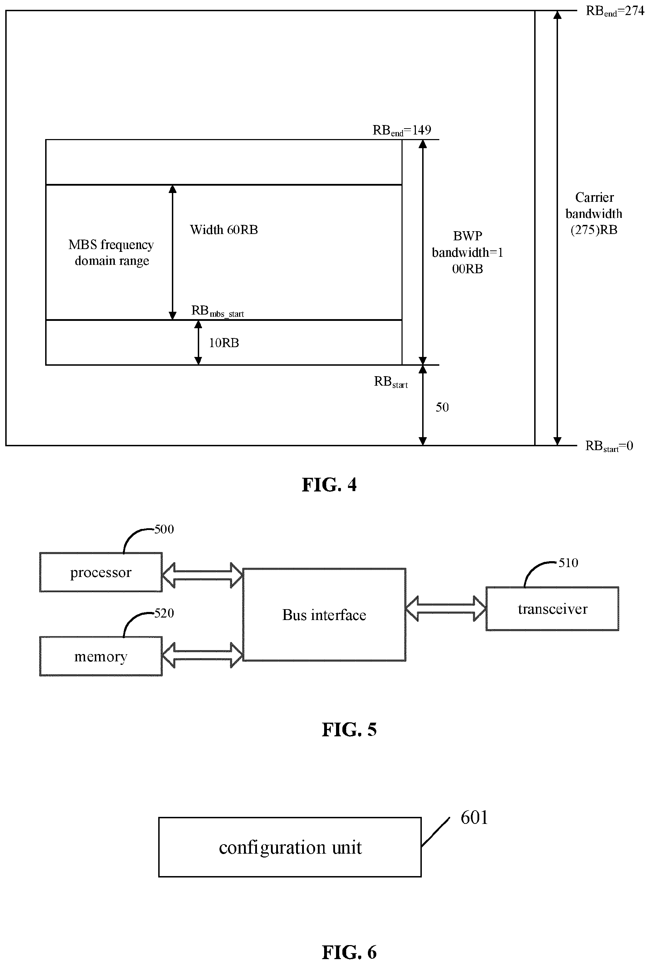

For example, assume that the initial BWP bandwidth configuration parameters are: $RB_{start}$ = 50, $N_{BWP}^{size} = 100$; the MBS bandwidth configuration parameters are: $RB_{mbs\_start}$ = 10, $N_{mbs-BWP}^{size} = 60$. Then the relationship between the frequency domain position of the MBS and the frequency domain position of the initial BWP is shown in FIG. 4.

It should be noted that this example is based on configuring the special parameters of the MBS on the initial BWP. Since the common parameters of the initial BWP are sent through broadcast messages, this example is implemented by sending broadcast messages. When the special parameters of the MBS are configured on the terminal-specific BWP, the special parameters of the MBS need to be configured through RRC messages.

Step 2, reducing the number of control signaling lengths (DCI size). The method to reduce the number of control signaling lengths include:

First reducing the number of DCI sizes of unicast. If the sum of the reduced number of "different DCI-sizes of unicast" and the number of "different DCI sizes of MBS" meets the requirements of terminal DCI detection capabilities, then step 3 is implemented; otherwise, removing a DCI size in unicast (for example: remove the DCI size of format 0_2 and format 1_2, or format 0_1 or 1_1), the terminal does not detect the DCI format of the corresponding DCI size, and the terminal performs MBS-related DCI format detection.

It is assumed that the number of different DCI sizes of the first BWP is 7, as shown in Table 1.

Table 1

| number of different DCI sizes | Including ( DCI format) | Search space |
|---|---|---|
| DCI-SIZE-1 | format 0_0, format 1_0 | Common search space CSS |
| DCI-SIZE-2 | format 0_0, format 1_0 | UE search space USS |
| DCI-SIZE-3 | format 0_2 | UE search space USS |
| DCI-SIZE-4 | format 1_2 | UE search space USS |
| DCI-SIZE-5 | format 0_1 | UE search space USS |
| DCI-SIZE-6 | format 1_1 | UE search space USS |
| DCI-SIZE-7 | Format x | Control channel detection for MBS |

As shown in Table 1, the lengths of DCI-SIZE-1 and DCI-SIZE-2 are aligned and normalized into one DCI-SIZE-A; the lengths of DCI-SIZE-3 and DCI-SIZE-4 are aligned and normalized into one DCI-SIZE-B; the lengths of DCI-SIZE-5 and DCI-SIZE-6 are aligned and normalized into one DCI-SIZE-C.

After the above steps, if the number of different DCI sizes still exceeds the channel detection capability of the terminal. Then: both the base station and the terminal delete all DCI formats corresponding to the above-mentioned DCI size of unicast, that is, the terminal does not perform PDCCH detection on these deleted DCI formats, and detect the DCI format corresponding to the MBS and other DCI formats of unicast that have not deleted. For example: when the format 0_1 and format 1_1 corresponding to DCI-SIZE-C are deleted, the terminal only performs the detection of format 0_0, format 1_0, format 0_2, format 1_2 and Format x.

Step 3, the terminal detects the PDCCH, and receives MSB data and/or unicast data according to the DCI instruction.

On the candidate PDCCH to be detected, the terminal continues PDCCH blind detection and DCI content analysis according to the DCI format type and the length of DCI size, receives the PDSCH according to the analysis result, and feeds back the HARQ-ACK.

In particular, on the terminal side, different configuration parameters are required to receive MBS and unicast PDSCH, and the reconfiguration of parameters is that the terminal can only determine the use of MBS or unicast PDSCH after detecting PDCCH and completing DCI analysis. It takes a certain amount of time for the terminal to execute, which will affect the minimum feedback time of HARQ-ACK (that is, the N1 value: the earliest time from the end of PDSCH to HARQ-ACK feedback), such as: when configuring PDSCH parameters of unicast or MBS, a N1_offset (for example: N1_offset = 2 symbols) is added, the base station indicates that the HARQ-ACK feedback time is not less than (N1+N1_offset); where N1 is the minimum HARQ-ACK feedback value when MBS data scheduling is not introduced.

It should be noted that step 1 of this example is to configure the initial BWP as the first BWP. At the same time, other BWPs configured by high-level messages can also be used as the first BWP. For example, the following message is used to configure a non-initial BWP as the first BWP, the configuration message of BWP contains the following parameter information:

BWP Id: identifying the first BWP identification number configured this time;
BWP common parameter: identifying the common parameter of the BWP configured this time;
BWP-Special: identifying the unicast special parameters of the BWP configured this time;
BWP-Special-MBS: identifying the special parameters of the MBS in the first BWP.

Example 2

Step 1, configuring the first special parameter, the second special parameter and the common parameter of the first BWP.

B1: Configuring the common parameter of a specific BWP through high-level signaling (such as RRC messages).

Configure the common parameter of a specific BWP and send them through high-level messages; when the initial BWP is configured, the common parameter is sent through the broadcast channel; when the configured BWP is for a specific terminal, the RRC message is used for configuration, and the BWP for a specific terminal is used below as an example. The main parameters include at least one of the following:

BWP ID: identifying the configured BWP identification number, the value is 1 or 4;
Subcarrier spacing SCS: the value is one of 15KHz, 30KHz, 60KHz, 120KHz, 240KHz, 480KHz, 960KHz;
CP type: set to extended CP or normal CP;
BWP width and location indication (locationAndBandwidth): the parameter includes the starting location $RB_{start}$ and length $N_{BWP}^{size}$ (number of RBs); the maximum value of locationAndBandwidth is calculated according to the maximum number of RBs supported by each carrier (for example: the carrier supports up to 275RB) , that is the number of combination types of $RB_{start}$ and length $N_{BWP}^{size}$ is 275*(275+1)/2= 37950, and the value range of locationAndBandwidth is (0..37949); it means that the number of digits of the value information is 16bit.

Control resource set: A resource set for unicast and broadcast/multicast control channels, including the number of symbols occupied by PDCCH (1, 2 or 3), frequency domain bandwidth, control resource ID (identification number), etc.

B2: In the broadcast/multicast or special message, configuring the second special parameter of MBS;
The special parameter configuration of MBS is broadcast in the cell through the broadcast channel. For terminals being interested in the MBS service, the relevant configuration parameters are analyzed, mainly including at least one of the following:
Control resource set: the resource set for indicating the MBS control channel, including the number of symbols occupied by PDCCH, frequency domain bandwidth, control resource ID (identification number), etc.; the content of this field is optional (the base station may configure or not configure the same).

Search space: for indicating the detection timing of MBS control channel, indicating the time at which the terminal detects the MBS PDCCH, and the resource set size of the PDCCH is indicated by the control resource ID (identification number). When the base station does not configured the control resource set special for MBS, the control channel resource set configured in the BWP common parameters is used.

Time domain scheduling parameter: the time domain scheduling parameter is used for data scheduling of the PDSCH as a parameter, and indicates the time domain position in the time-domain of the scheduled PDSCH, including: a starting position and a length. The start position includes the slot start position (k0), the symbol start position (S) and the data length (L) after receiving the PDCCH.

MBS common resource bandwidth and location: the maximum bandwidth of the parameter used for MBS scheduling. Its definition method can use one of the following:

Defining an absolute position in the frequency domain (such as position point A); by defining the absolute position of the MBS common resource, all receiving terminals can determine the position of the frequency according to this value, such as using the Absolute Radio Frequency Channel Number (ARFCN), this value is the global unified wireless channel number.

Based on the location point A, the start and bandwidth of the MBS common resources are determined using location and bandwidth parameters. For example, location and bandwidth parameters are indicated to the terminal, the parameters include $RB_{start}$ and length $N_{BWP}^{size}$ , $RB_{start}$ can be expressed as an offset relative to location point A. $N_{BWP}^{size}$ indicates the bandwidth of MBS common resources.

MBS common resource ID: ID number identifying this configuration, used to establish a relationship between the special parameters of MBS and the corresponding BWP. If the base station only supports parameter configuration of a special BWP for an MBS, the ID can be 0 by default, or not configured.

B3: The base station instructs to associate the second special parameter of the MBS with a specific BWP. The association method can be indicated by RRC message or by MAC CE. In the association message, at least BWP ID and MBS common resource ID are included. one of the following association messages are used:

1) The BWP configuration message contains the following parameter information to associate the BWP ID with the MBMS common resource ID:

BWP-Id: identifying the first BWP identification number configured this time.
BWP-DownlinkCommon: identifying the common parameters of the BWP configured this time.
MBS common resource ID: identifying the associated MBS common resource configuration index number in the first BWP configured this time.

2) In MAC CE or RRC, the association command is used to associate the BWP ID with the MBS common resource ID. The association command includes:

BWP-Id: Identifying the hybrid BWP identification number configured this time.
Carrier ID: Cell carrier number.
MBS common resource ID.: identifying the associated MBS common resource configuration index number in the first BWP configured this time.

Step 2, reducing the number of control signaling lengths (DCI size). The method to reduce the number of control signaling lengths include:
First reducing the number of DCI sizes of unicast. If the sum of the reduced number of "different DCI-sizes of unicast" and the number of "different DCI sizes of MBS" meets the requirements of terminal DCI detection capabilities, then step 3 is implemented; otherwise, removing the DCI size of the MBS, and the PDCCH of unicast is used to schedule MBS data. (For this terminal, the MBS data service is changed from the group G-RNTI scheduling mechanism to the terminal-based C-RNTI scheduling).

It is assumed that the number of different DCI sizes of the first BWP is 7, as shown in Table 2.

Table 2

| Number of different DCI sizes | Including (DCI format) | Search space |
|---|---|---|
| DCI-SIZE-1 | format 0_0, format 1_0 | Common search space CSS |
| DCI-SIZE-2 | format 0_0, format 1_0 | UE search space USS |
| DCI-SIZE-3 | format 0_2 | UE search space USS |
| DCI-SIZE-4 | format 1_2 | UE search space USS |
| DCI-SIZE-5 | format 0_1 | UE search space USS |
| DCI-SIZE-6 | format 1_1 | UE search space USS |
| DCI-SIZE-7 | Format x | Control channel detection of MBS |

As shown in Table 2, the lengths of DCI-SIZE-1 and DCI-SIZE-2 are aligned and normalized into one DCI-SIZE-A; the lengths of DCI-SIZE-3 and DCI-SIZE-4 are aligned and normalized into one DCI-SIZE-B; the lengths of DCI-SIZE-5 and DCI-SIZE-6 are aligned and normalized into one DCI-SIZE-C.

After the above steps, if the number of different DCI sizes still exceeds the channel detection capability of the terminal. Then: both the base station and the terminal delete all DCI formats corresponding to the above-mentioned DCI size of unicast, that is, the terminal does not perform PDCCH detection on these deleted DCI formats. MBS detection uses unicast DCI format detection, and the unicast format can be one or more of the downlink scheduling formats (format 1_0/1_1/1_2).

Step 3, the terminal detects the PDCCH, and receives MSB data and/or unicast data according to the DCI instruction.

On the candidate PDCCH to be detected, the terminal continues PDCCH blind detection and DCI content analysis according to the DCI format type and the length of DCI size, receives the PDSCH according to the analysis result, and feeds back the HARQ-ACK.

In particular, on the terminal side, different configuration parameters are required to receive MBS and unicast PDSCH, and the reconfiguration of parameters is that the terminal can only determine the use of MBS or unicast PDSCH after detecting PDCCH and completing DCI analysis. It takes a certain amount of time for the terminal to execute, which will affect the minimum feedback time of HARQ-ACK (that is, the N1 value: the earliest time from the end of PDSCH to HARQ-ACK feedback), such as: when configuring PDSCH parameters of unicast or MBS, a N1_offset (for example: N1_offset = 2 symbols) is added, the base station indicates that the HARQ-ACK feedback time is not less than (N1+N1_offset); where N1 is the minimum HARQ-ACK feedback value when MBS data scheduling is not introduced.

Example 3, unicast DCI size and MBS DCI size are aligned

Table 3 shows the length of the DCI size by reducing the number of control signaling lengths of the unicast.

| Number of different DCI sizes | DCI format | Search space |
|---|---|---|
| DCI-SIZE-A | format 0_0, format 1_0 | Common search space CSS UE search space USS |
| DCI-SIZE-B | format 0_2, format 1_2 | UE search space USS |
| DCI-SIZE-C | format 0_1, format 1_1 | UE search space USS |
| DCI-SIZE-7 | Format x | Control channel detection for MBS |
| Table3 | | |

Assuming that the maximum number of different DCI sizes supported by the terminal is 3, use one of the following methods to reduce the above 4 different DCI sizes to 3.
one of the generated "unicast DCI size" (three sizes: A/B/C) is selected to align with the MBS DCI size. The method is to determine whether the DCI size of the USS is smaller than the MBS DCI size,

If yes, the DCI format closest to the MBS DCI size is selected, and zero padding is implemented until it is the same as the MBS DCI size

If no (MBS DCI size is smaller than all the above 3 sizes), then:
Deleting the DCIT format corresponding to the DCI size of MBS, and the unicast DCI format is used for MBS detection. The unicast format can be one or more of the downlink scheduling formats (format 1_0/1_1/1_2).

Example 4, unicast DCI size and MBS DCI size are aligned

In the embodiment of the present disclosure, the length of the DCI size is shown in Table 1 or Table 2. In this example, the length DCI-SIZE-7 of the MBS DCI format Format x is aligned with the length DCI-SIZE-1 of the fallback DCI format (format 0_0, format 1_0), even if DCI-SIZE-7 is equal to DCI-SIZE- 1. In this way, the DCI size alignment scheme in the related art can be used to ensure that the number of different DCI sizes is within the capability of the terminal.

For example, the MBS DCI format is based on format 1_0, some field information in format 1_0 are used to represent a part of the MBS scheduling information.
1) Field 1 (DCI format indication) of format 1_0 indicates uplink/downlink scheduling in fallback DCI. In MBS scheduling, since only downlink data is scheduled, this field can be for information in other aspects for MBS, for example, this bit is for a part of "time-domain resource allocation indication".
2) The "PUCCH power control parameter" field indicates the uplink PUCCH power control command of a specific terminal. In MBS scheduling, since the scheduling is for a group of terminals, this field can be for information in other aspects for MBS, for example, the bit is for a part of "time-domain resource allocation indication".
3) Field 2 (frequency domain resource allocation indication) of format 1_0, field 1 (DCI format indication, 1 bit) and field 11 (PUCCH resource indication, 2 bits) are used as an example to illustrate the frequency domain allocation indication exceeding 48 RB. As shown in Table 4.

Table 4

| Information position | Upper bit | Middle bit | Lower bit |
|---|---|---|---|
| Bit number | 2 | 1 | 11 |
| indicating | Field 11 (PUCCH resource indication, 2bit) | Field 1 (DCI format indication, 1 bit) | Field 2 (frequency domain resource allocation indication)- $$\left\lceil \log_2(N_{RB}(N_{RB}^{U} + 1) / 2) \right\rceil$$ $N_{RB}^{U}$ is 48 |

When the common resource bandwidth of the MBS is less than or equal to 48 RB, only the 11 lower bits are used to represent the frequency domain scheduling information of the MBS.

When the common resource bandwidth of the MBS is less than or equal to 90 RB, the middle bit (1 bit) and the lower bits (11 bits) represent the frequency domain scheduling information of the MBS.

When the common resource bandwidth of the MBS is less than or equal to 180 RB, the upper bits (2 bits), the middle bit (1 bit) and the lower bits (11 bits) represent the frequency domain scheduling information of the MBS.

As shown in FIG. 5, the embodiment of the present disclosure also provides a network side device, including a memory 520, a transceiver 510, and a processor 500;

The memory 520 is used to store computer programs; the transceiver 510 is used to send and receive data under the control of the processor; the processor 500 is used to read the computer programs in the memory and perform the following operations:

configuring a first special parameter, a second special parameter and a common parameter for a first BWP;
wherein, the common parameter is used for unicast data and broadcast/multicast data transmission; the first special parameter is for transmission of the unicast data; the second special parameter is for transmission of the broadcast/multicast data.

As an optional embodiment, the first BWP applies for any one of the following:

BWP corresponding to a first control resource set;
initial BWP;
BWP configured through high-layer signaling.

As an optional embodiment, the processor 500 is further configured to read a computer program in the memory and perform the following operations:

Configuring first special parameter of the first BWP by a first high-layer signaling;
Configuring the common parameter of the first BWP through a first broadcast message or a second high-layer signaling;
Configuring the second special parameter of the first BWP through the first high-layer signaling or the first broadcast message or the second high-layer signaling.

As an optional embodiment, the processor 500 is further configured to read a computer program in the memory and perform the following operations:

Configuring the first special parameter of the first BWP through a third high-layer signaling;
Configuring the common parameters of the first BWP through a second broadcast message or a fourth high-layer signaling;
Configuring the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

As an optional embodiment, the processor 500 is further configured to read a computer program in the memory and perform the following operations:
Sending an association message through high-level signaling or a medium access control layer control element (MAC CE); wherein the association message is used to associate the second special parameter with the first BWP; the association message includes: an identifier of the first BWP and a the configuration identifier corresponding to the second special parameter.

As an optional embodiment, the second special parameter includes the configuration identifier corresponding to the second special parameter;
the configuration parameter of the first BWP applies for the configuration identifier corresponding to the second special parameter; the second special parameter carrying a configuration identifier corresponding to the same second special parameter is associated with the first BWP.

As an optional embodiment, the second special parameter includes at least one of the following:

Special parameter configuration identifier of broadcast/multicast;

Control resource set parameters of broadcast/multicast;
Search space parameters of broadcast/multicast;
Time domain scheduling parameters of broadcast/multicast;
Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

As an optional embodiment, the processor is further configured to read a computer program in the memory and perform the following operations:

keeping same size of the control signaling of broadcast/multicast with the fallback control signaling of the common search space;
or,
Reducing the number of control signaling lengths of unicast.

As an optional embodiment, in the case that the control signaling length of the broadcast/multicast is aligned with the fallback control signaling length of the common search space, the processor is further configured to read a computer program in the memory and perform the following operations:
Using part of fields of the fallback control signaling to carry part or all of the frequency domain scheduling information of the broadcast/multicast.

Wherein, the frequency domain scheduling information length of the broadcast/multicast is greater than the frequency domain scheduling information length in the fallback control signaling.

In some embodiments of the present disclosure, the processor is further configured to read the computer program in the memory and perform the following operations:
Using other fields in the fallback control command other than the part of fields to extend an indication range of the frequency domain scheduling information of the broadcast/multicast.

As an optional embodiment, the processor is further configured to read a computer program in the memory and perform the following operations:

Deleting DCI format corresponding to at least one control signaling length in unicast;
or,
Deleting the DCI format corresponding to the control signaling length of broadcast/multicast, and using the unicast control channel to schedule the broadcast/multicast data;
or,
Selecting a control signaling length from the reduced control signaling length of unicast to align with the control signaling length of broadcast/multicast; wherein, the selected control signaling length is smaller than the control signaling length of broadcast/multicast.

As an optional embodiment, the processor is further configured to read a computer program in the memory and perform the following operations:
Selecting the control signaling format of unicast closest to the control signaling length of broadcast/multicast, and performing zero padding until the length is the same as the control signaling length of the broadcast/multicast.

Wherein, in FIG. 5, the bus architecture may include any number of interconnected buses and bridges, specifically various circuits of one or more processors represented by the processor 500 and the memory represented by the memory 520 are linked together. The bus architecture can also link together various other circuits such as peripherals, voltage regulators, and power management circuits, etc., which are well known in the art and therefore will not be further described herein. The bus interface provides the interface. Transceiver 510 may be a plurality of elements, including a transmitter and a receiver, providing a unit for communicating with various other devices over transmission medium, including wireless channels, wired channels, optical cables, and other transmission medium. The processor 500 is responsible for managing the bus architecture and general processing, and the memory 520 can store data used by the processor 500 when performing operations.

The processor 500 may be a central processing unit (CPU), an application specific integrated circuit (ASIC), a field programmable gate array (FPGA) or a complex programmable logic device (CPLD), the processor can also adopt a multi-core architecture.

In the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

It should be noted that the network side device provided by the embodiments of the present disclosure is a network side device capable of executing the above-mentioned method for configuring the bandwidth part BWP, and all embodiments of the above-mentioned method for configuring the bandwidth part BWP are applicable to the network side device, and can achieve the same or similar beneficial effects.

As shown in FIG. 6, the embodiment of the present disclosure also provides a device for configuring the BWP, which is applied to the network side device, including:

A configuration unit 601, configured to configure a first special parameter, a second special parameter and a common parameter for a first BWP;

wherein, the common parameter is used for unicast data and broadcast/multicast data transmission; the first special parameter is for transmission of the unicast data; the second special parameter is for transmission of the broadcast/multicast data.

As an optional embodiment, the first BWP applies for any one of the following:

BWP corresponding to a first control resource set;
initial BWP;
BWP configured through high-layer signaling.

As an optional embodiment, the configuration module includes:

a first configuration sub-module, configured to configure first special parameter of the first BWP by a first high-layer signaling;
a second configuration sub-module, configured to configure the common parameter of the first BWP through a first broadcast message or a second high-layer signaling;
a third configuration sub-module, configured to configure the second special parameter of the first BWP through the first high-layer signaling or the first broadcast message or the second high-layer signaling.

As an optional embodiment, the configuration module includes:

a fourth configuration sub-module, configured to configure the first special parameter of the first BWP through a third high-layer signaling;
a fifth configuration sub-module, configured to configure the common parameters of the first BWP through a second broadcast message or a fourth high-layer signaling;
a sixth configuration sub-module, configured to configure the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

As an optional embodiment, the device also includes:

An association sending module, configured to send an association message through high-level signaling or a medium access control layer control element (MAC CE); wherein the association message is used to associate the second special parameter with the first BWP; the association message includes: an identifier of the first BWP and a the configuration identifier corresponding to the second special parameter.

As an optional embodiment, the second special parameter includes a configuration identifier corresponding to the second special parameter;

the configuration parameter of the first BWP applies for the configuration identifier corresponding to the second special parameter.

As an optional embodiment, the second special parameter includes at least one of the following:

Special parameter configuration identifier of broadcast/multicast;
Control resource set parameters of broadcast/multicast;
Search space parameters of broadcast/multicast;
Time domain scheduling parameters of broadcast/multicast;
Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

As an optional embodiment, the device also includes:

A processing module, configured to control to align the control signaling length of broadcast/multicast with the fallback control signaling length of the common search space;
or,
Reduce the number of control signaling lengths of unicast.

As an optional embodiment, in the case that the control signaling length of the broadcast/multicast is aligned with the fallback control signaling length of the common search space, the device further includes:

a scheduling module, configured to use part of fields of the fallback control signaling to carry part or all of the frequency domain scheduling information of the broadcast/multicast.

In some embodiments of the present disclosure, the frequency domain scheduling information length of the broadcast/multicast is greater than the frequency domain scheduling information length in the fallback control signaling.

In some embodiments of the present disclosure, the scheduling module is also configured to:

Use other fields in the fallback control command other than the part of fields to extend an indication range of the frequency domain scheduling information of the broadcast/multicast.

As an optional embodiment, the device also includes:

a second processing module, configured to delete DCI format corresponding to at least one control signaling length in unicast;
Or, delete the DCI format corresponding to the control signaling length of broadcast/multicast, and using the unicast control channel to schedule the broadcast/multicast data;
Or, Select a control signaling length from the reduced control signaling length of unicast to align with the control signaling length of broadcast/multicast; wherein, the selected control signaling length is smaller than the control signaling length of broadcast/multicast.

As an optional embodiment, the second processing module is further configured to select the control signaling format of unicast closest to the control signaling length of broadcast/multicast, and performing zero padding until the length is the same as the control signaling length of the broadcast/multicast.

In the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

It should be noted that the BWP configuration device provided by the embodiment of the present disclosure is a device capable of executing the above-mentioned bandwidth part BWP configuration method, and all the embodiments of the above-mentioned BWP configuration method are applicable to the device, and can achieve the same or similar beneficial effects.

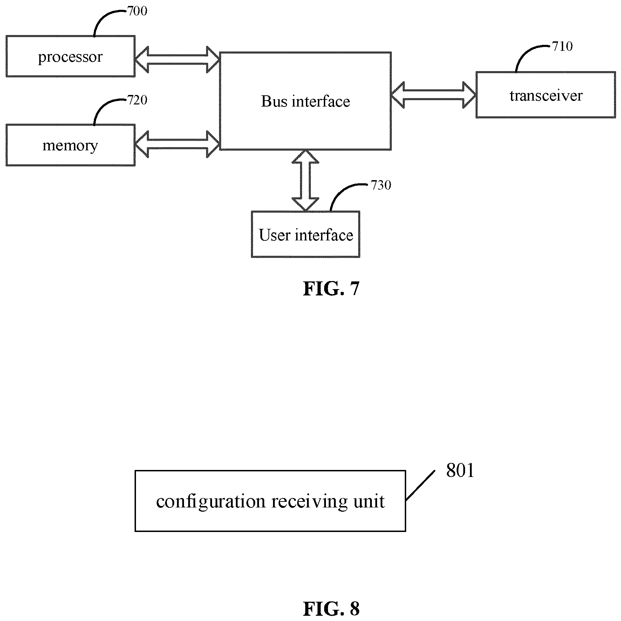

As shown in FIG. 7, an embodiment of the present disclosure also provides a terminal including a memory 720, a transceiver 710, a processor 700, and a user interface 730;

The memory 720 is used to store computer programs; the transceiver 710 is used to send and receive data under the control of the processor; the processor 700 is used to read the computer programs in the memory 720 and perform the following operations:

receiving a first special parameter, a second special parameter and a common parameter configured by a network side device for a first BWP;

wherein the common parameter is used for the unicast data and the broadcast/multicast data transmission; the first special parameter is for transmission of unicast data; the second special parameter is for transmission of broadcast/multicast data.

As an optional embodiment, the first BWP applies for any one of the following:

BWP corresponding to a first control resource set
initial BWP;
BWP configured through high-layer signaling.

As an optional embodiment, the processor is further configured to read a computer program in the memory and perform the following operations:

receiving first special parameter of the first BWP by a first high-layer signaling;
receiving the common parameter of the first BWP through a first broadcast message or a second high-layer signaling;
receiving the second special parameter of the first BWP through the first high-layer signaling or the first broadcast message or the second high-layer signaling.

As an optional embodiment, the processor is further configured to read a computer program in the memory and perform the following operations:

receiving the first special parameter of the first BWP through a third high-layer signaling;
receiving the common parameters of the first BWP through a second broadcast message or a fourth high-layer signaling;
receiving the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

As an optional embodiment, the processor is further configured to read a computer program in the memory and perform the following operations:
receiving an association message through high-level signaling or a medium access control layer control element (MAC CE); wherein the association message is used to associate the second special parameter with the first BWP; the association message includes: an identifier of the first BWP and a the configuration identifier corresponding to the second special parameter.

As an optional embodiment, the second special parameter includes the configuration identifier corresponding to the second special parameter;
the configuration parameter of the first BWP applies for the configuration identifier corresponding to the second special parameter.

As an optional embodiment, the second special parameter includes at least one of the following:

Special parameter configuration identifier of broadcast/multicast;
Control resource set parameters of broadcast/multicast;
Search space parameters of broadcast/multicast;
Time domain scheduling parameters of broadcast/multicast;

Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

As an optional embodiment, the processor is further configured to read a computer program in the memory and perform the following operations:

keeping same size of the control signaling of broadcast/multicast with the fallback control signaling of the common search space;
or,
reducing the number of control signaling lengths of unicast.

As an optional embodiment, in the case that the control signaling length of the broadcast/multicast is aligned with the fallback control signaling length of the common search space, the method further includes:
Using part of fields of the fallback control signaling to carry part or all of the frequency domain scheduling information of the broadcast/multicast.

In some embodiments of the present disclosure, the frequency domain scheduling information length of the broadcast/multicast is greater than the frequency domain scheduling information length in the fallback control signaling.

In some embodiments of the present disclosure, the processor is further configured to read the computer program in the memory and execute:
Using other fields in the fallback control command other than the part of fields to extend an indication range of the frequency domain scheduling information of the broadcast/multicast.

As an optional embodiment, the processor is further configured to read a computer program in the memory and perform the following operations:

Deleting DCI format corresponding to at least one control signaling length in unicast;
or,
Deleting the DCI format corresponding to the control signaling length of broadcast/multicast, and using the unicast control channel to schedule the broadcast/multicast data;
or,
Selecting a control signaling length from the reduced control signaling length of unicast to align with the control signaling length of broadcast/multicast; wherein, the selected control signaling length is smaller than the control signaling length of broadcast/multicast.

As an optional embodiment, the processor is further configured to read a computer program in the memory and perform the following operations:

Selecting a unicast control signaling format closest to the control signaling length of the broadcast/multicast, and performing zero padding until the length is the same as the control signaling length of the broadcast/multicast.

Wherein, in FIG. 7, the bus architecture may include any number of interconnected buses and bridges, specifically various circuits of one or more processors represented by the processor 700 and the memory represented by the memory 720 are linked together. The bus architecture can also link together various other circuits such as peripherals, voltage regulators, and power management circuits, etc., which are well known in the art and therefore will not be further described herein. The bus interface provides the interface. Transceiver 710 may be a plurality of elements, including a transmitter and a receiver, providing a unit for communicating with various other devices over transmission medium, including wireless channels, wired channels, fiber optic cables, etc. For different user devices, the user interface 730 may also be an interface capable of connecting externally and internally to required devices, and the connected devices include but not limited to a keypad, a display, a speaker, a microphone, a joystick, and the like.

The processor 700 is responsible for managing the bus architecture and general processing, and the memory 720 can store data used by the processor 600 when performing operations.

Optionally, the processor 700 may be a CPU, ASIC, FPGA or CPLD, and the processor can also adopt a multi-core architecture.

The processor is used to execute any one of the methods provided in the embodiments of the present disclosure according to the obtained executable instructions by calling the computer program stored in the memory. The processor and memory may also be physically separated.

In the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

It should be noted that the terminal provided by the embodiments of the present disclosure is a terminal capable of executing the above-mentioned method for configuring the bandwidth part BWP, and all the embodiments of the above-mentioned method for configuring the bandwidth part BWP are applicable to the terminal, and can achieve the same or similar beneficial effect.

As shown in FIG. 8, the embodiment of the present disclosure also provides an apparatus for configuring a bandwidth part BWP, which is applied to a terminal, including:

Configuration receiving unit 801, configured to receive a first special parameter, a second special parameter, and a common parameter configured by a network side device for a first BWP;
wherein the common parameter is used for the unicast data and the broadcast/multicast data transmission; the first special parameter is for transmission of unicast data; the second special parameter is for transmission of broadcast/multicast data.

As an optional embodiment, the first BWP applies for any one of the following:

BWP corresponding to a first control resource set
initial BWP;
BWP configured through high-layer signaling.

As an optional embodiment, the configuration receiving module includes:

a first receiving sub-module, configured to receive first special parameter of the first BWP by a first high-layer signaling;
a second receiving sub-module, configured to receive the common parameter of the first BWP through a first broadcast message or a second high-layer signaling;
a third receiving sub-module, configured to the second special parameter of the first BWP through the first high-layer signaling or the first broadcast message or the second high-layer signaling.

As an optional embodiment, the configuration receiving module includes:

a fourth receiving sub-module, configured to receive the first special parameter of the first BWP through a third high-layer signaling;
a fifth receiving sub-module, configured to receive the common parameters of the first BWP through a second broadcast message or a fourth high-layer signaling;
a sixth receiving sub-module, configured to receive the second special parameter through a third broadcast message or a fifth high-level signaling, wherein the second special parameter is associated with the first BWP; the third broadcast message and the second broadcast message are different broadcast messages; the fifth high-level signaling and the third high-level signaling are different high-level signaling, and the fifth high-level signaling and the fourth high-level signaling are different high-level signaling.

As an optional embodiment, the device also includes:
An association receiving module, configured to receive an association message through high-level signaling or a medium access control layer control element (MAC CE); wherein the association message is used to associate the second special parameter with the first BWP; the association message includes: an identifier of the first BWP and a the configuration identifier corresponding to the second special parameter.

As an optional embodiment, the second special parameter includes the configuration identifier corresponding to the second special parameter;

the configuration parameter of the first BWP applies for the configuration identifier corresponding to the second special parameter.

As an optional embodiment, the second special parameter includes at least one of the following:

Special parameter configuration identifier of broadcast/multicast;
Control resource set parameters of broadcast/multicast;
Search space parameters of broadcast/multicast;
Time domain scheduling parameters of broadcast/multicast;
Common resource bandwidth and location of broadcast/multicast;
A common resource identifier of broadcasting multicast.

In some embodiments of the present disclosure, when configuring the search space of the broadcast/multicast, the second special parameter is used for configuring the control resource set of broadcast/multicast, and/or the common parameter is used for configuring the control resource set.

In some embodiments of the present disclosure, when the second special parameter does not configure the control resource set of broadcast/multicast: when configuring the search space of broadcast/multicast, only using the control resource set configured by the common parameter.

In some embodiments of the present disclosure, the configuration of the common resource bandwidth and location of the broadcast/multicast is configured according to the location and bandwidth in the initial BWP common parameters, and the bandwidth is greater or smaller than the initial BWP bandwidth.

As an optional embodiment, the device also includes:

A processing module, configured to control to align the control signaling length of broadcast/multicast with the fallback control signaling length of the common search space;
or,
reduce the number of control signaling lengths of unicast.

As an optional embodiment, in the case that the control signaling length of the broadcast/multicast is aligned with the fallback control signaling length of the common search space, the device further includes:
a scheduling module, configured to use part of fields of the fallback control signaling to carry part or all of the frequency domain scheduling information of the broadcast/multicast.

In some embodiments of the present disclosure, the frequency domain scheduling information length of the broadcast/multicast is greater than the frequency domain scheduling information length in the fallback control signaling.

In some embodiments of the present disclosure, the scheduling module is also configured to:
Use other fields in the fallback control command other than the part of fields to extend an indication range of the frequency domain scheduling information of the broadcast/multicast.

As an optional embodiment, the device also includes:

a second processing module, configured to delete DCI format corresponding to at least one control signaling length in unicast;
Or, delete the DCI format corresponding to the control signaling length of broadcast/multicast, and using the unicast control channel to schedule the broadcast/multicast data;
Or, Select a control signaling length from the reduced control signaling length of unicast to align with the control signaling length of broadcast/multicast; wherein, the selected control signaling length is smaller than the control signaling length of broadcast/multicast.

As an optional embodiment, the second processing module is further configured to select a unicast control signaling format closest to the control signaling length of the broadcast/multicast, and performing zero padding until the length is the same as the control signaling length of the broadcast/multicast.

In the embodiment of the present disclosure, the network is configured with a first BWP that supports unicast data transmission and broadcast/multicast data transmission, and the first BWP applies for common parameters, first special parameters special to unicast data, and second special parameter special to broadcast/multicast data, the terminal can receive the MBS service without increasing the receiving capability of the terminal, thereby improving user experience. A further embodiment of the present disclosure also provides a method for reducing the control signaling length when the number of different control signaling lengths exceeds the capability of the terminal, which supports flexible scheduling of network-side device and can maintain the detection ability of the current physical downlink control channel PDCCH.

It should be noted that the BWP configuration device provided by the embodiment of the present disclosure is a device capable of executing the above-mentioned bandwidth part BWP configuration method, and all the embodiments of the above-mentioned bandwidth part BWP configuration method are applicable to this device, and can achieve the same or similar beneficial effects.

In addition, it should be noted that the division of units in the embodiment of the present disclosure is for illustration, and is only a logical function division, and there may be other division methods in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on this understanding, the technical solution of the present disclosure is essentially or part of the contribution to the prior art or all or part of the technical solution can be embodied in the form of a software product, and the computer software product is stored in a storage medium, including several instructions for enabling a computer device (which may be a personal computer, a server, or a network device, etc.) or a processor to execute all or part of the steps of the methods described in the various embodiments of the present disclosure. The aforementioned storage medium include: U disk, mobile hard disk, read-only memory (ROM), random access memory (RAM), magnetic disk or optical disk and other medium that can store program codes.

The embodiment of the present disclosure also provides a processor-readable storage medium, the processor-readable storage medium stores a computer program, and the computer program is used to enable the processor to execute the information processing method on the first server side; or, the computer program is used to make the processor execute the information processing method on the second server side; or, the computer program is used to make the processor execute the information processing method on V2X UE side.

Wherein, the processor-readable storage medium can be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-status hard drive (SSD)), etc.

Those skilled in the art should understand that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product embodied on one or more computer-readable storage medium (including but not limited to disk storage and optical storage, etc.) having computer-readable program codes.

The present disclosure is described with reference to flowcharts and/or block diagrams of methods, devices (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing device to produce a machine, such that instructions executed by the processor of the computer or other programmable data processing device produce means for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product, the instruction device realizes the function specified in one or more procedures of the flow chart and/or one or more blocks of the block diagram.

These processor-executable instructions can also be loaded onto a computer or other programmable data processing device, causing a series of operational steps to be performed on the computer or other programmable device to produce a computer-implemented processing, the instructions executed on the computer and other programmable device provide steps for implementing the functions specified in one or more flows of the flowchart or one or more block in the block diagram.

It should be noted that it should be understood that the division of the above modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, the determining module may be a separate processing element, or may be integrated in a chip of the above-mentioned device. In addition, it may be stored in the memory of the above-mentioned device in the form of program code, and a certain processing element of the above-mentioned device may call and execute the functions of the modules identified above. The implementation of other modules is similar. In addition, all or part of these modules can be integrated together, and can also be implemented independently. The processing element mentioned here may be an integrated circuit with signal processing capability. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or Multiple microprocessors (digital signal processor, DSP), or, one or more field programmable gate arrays (FPGA), etc. For another example, when one of the above modules is implemented in the form of a processing element scheduling program code, the processing element may be a general-purpose processor, such as a central processing unit (CPU) or other processors that can call program codes. For another example, these modules can be integrated together and implemented in the form of a system-on-a-chip (SOC).

The terms "first", "second" and the like in the specification and claims of the present disclosure are used to distinguish similar objects, and are not necessarily used to describe a specific order or sequence. It should be understood that the data so used may be interchanged under appropriate circumstances such that the embodiments of the disclosure described herein are practiced, for example, in sequences other than those illustrated or described herein. Furthermore, the terms "comprising" and "having", as well as any variations thereof, are intended to cover a non-exclusive inclusion, for example, a process, method, system, product or device comprising a sequence of steps or elements is not necessarily limited to the expressly listed instead, may include other steps or elements not explicitly listed or inherent to the process, method, product or apparatus. In addition, the use of "and/or" in the description and claims means at least one of the connected objects, such as A and/or B and/or C, means that it includes A alone, B alone, C alone, and both A and B, both B and C, both A and C, and A, B, and C all exist, there are 7 situations. Similarly, the use of "at least one of A or B" in the present disclosure and claims should be understood as "A alone, B alone, or both A and B".

Obviously, those skilled in the art can make various changes and modifications to the present disclosure without departing from the spirit and scope of the present disclosure. In this way, if these change and modifications fall within the scope of the claims of the present disclosure and their equivalence, the present disclosure is also intended to include these change and modifications.

**Claims**

1. A bandwidth part (BWP) configuration method, applied to a network side device, comprising:

   configuring a first special parameter, a second special parameter and a common parameter for a first BWP;
   wherein the first special parameter is for transmission of unicast data; the second special parameter is for transmission of broadcast/multicast data, the common parameter is used for the unicast data and the broadcast/multicast data transmission.

2. The method according to claim 1, wherein the first BWP applies for any one of the following:

   a BWP corresponding to a first control resource set;
   an initial BWP; or
   a BWP configured through a high-layer signaling.

3. The method according to claim 1, wherein the configuring a first special parameter, a second special parameter and a common parameter for a first BWP comprises:

   configuring the first special parameter of the first BWP by a first high-layer signaling;
   configuring the common parameter of the first BWP through a first broadcast message or a second high-layer signaling;
   configuring the second special parameter of the first BWP through the first high-layer signaling or the first broadcast message or the second high-layer signaling.

4. The method according to claim 1, wherein the configuring a first special parameter, a second special parameter and a common parameter for a first BWP comprises:

   configuring the first special parameter of the first BWP through a third high-layer signaling;
   configuring the common parameter of the first BWP through a second broadcast message or a fourth high-layer signaling;
   configuring the second special parameter through a third broadcast message or a fifth high-level signaling, wherein the second special parameter is associated with the first BWP;

wherein the third broadcast message and the second broadcast message are different broadcast messages; the fifth high-level signaling and the third high-level signaling are different high-level signaling, and the fifth high-level signaling and the fourth high-level signaling are different high-level signaling.

5. The method according to claim 4, further comprising:
sending an association message through the high-level signaling or a medium access control layer control element (MAC CE); wherein the association message is used to associate the second special parameter with the first BWP; the association message includes: an identifier of the first BWP and a configuration identifier corresponding to the second special parameter.

6. The method according to claim 4, wherein the second special parameter includes the configuration identifier corresponding to the second special parameter;
a configuration parameter of the first BWP applies for the configuration identifier corresponding to the second special parameter.

7. The method according to claim 1, wherein the second special parameter comprises at least one of the following:

a special parameter configuration identifier of broadcast/multicast;
a control resource set parameter of broadcast/multicast;
a search space parameter of broadcast/multicast;
a time domain scheduling parameter of broadcast/multicast;
a common resource bandwidth and location of broadcast/multicast; or
a common resource identifier of broadcasting multicast.

8. The method according to claim 7, wherein when configuring the search space of the broadcast/multicast, the second special parameter is used for configuring the control resource set of broadcast/multicast, and/or the common parameter is used for configuring the control resource set.

9. The method according to claim 7 or 8, wherein when the second special parameter does not configure the control resource set of broadcast/multicast, only the control resource set configured by the common parameter is used for configuring the search space of broadcast/multicast.

10. The method according to any one of claims 7-9, wherein the configuration of the common resource bandwidth and location of the broadcast/multicast is configured according to a location and a bandwidth in the initial BWP common parameter, and the bandwidth is greater or smaller than the initial BWP bandwidth.

11. The method according to any one of claims 1-10, further comprising:

keeping same size of a control signaling of broadcast/multicast with a fallback control signaling of the common search space;
or,
reducing a number of control signaling lengths of unicast.

12. The method according to claim 11, wherein, in the case that the control signaling length of the broadcast/multicast is aligned with the fallback control signaling length of the common search space, the method further comprises:
using part of fields of the fallback control signaling to carry part or all of frequency domain scheduling information of the broadcast/multicast.

13. The method according to claim 12, wherein a frequency domain scheduling information length of the broadcast/multicast is greater than a frequency domain scheduling information length in the fallback control signaling.

14. The method according to claim 12 or 13, further comprising:

using other fields in the fallback control command other than the part of fields to extend an indication range of the frequency domain scheduling information of the broadcast/multicast.

15. The method according to claim 11, further comprising:

deleting a DCI format corresponding to at least one control signaling length in unicast;
or,
deleting a DCI format corresponding to the control signaling length of broadcast/multicast, and using a control channel of unicast to schedule the broadcast/multicast data;
or,
selecting a control signaling length from the reduced numbers of control signaling lengths of unicast to align with the control signaling length of broadcast/multicast; wherein, the selected control signaling length is smaller than the control signaling length of broadcast/multicast.

16. The method according to claim 15, wherein the selecting a control signaling length from the reduced numbers of control signaling lengths of unicast to align with the control signaling length of broadcast/multicast comprises:
selecting a control signaling format of unicast closest to the control signaling length of broadcast/multicast, and performing zero padding until the length is the same as the control signaling length of the broadcast/multicast.

17. A BWP configuration method, applied to a terminal, comprising:

receiving a first special parameter, a second special parameter and a common parameter configured by a network side device for a first BWP;
wherein the first special parameter is for transmission of unicast data; the second special parameter is for transmission of broadcast/multicast data, the common parameter is used for the unicast data and the broadcast/multicast data transmission.

18. The method according to claim 17, wherein the first BWP comprises any one of the following:

a BWP corresponding to a first control resource set;
an initial BWP; or
a BWP configured through a high-layer signaling.

19. The method according to claim 17, wherein the receiving a first special parameter, a second special parameter and a common parameter configured by a network side device for a first BWP comprises:

receiving the first special parameter of the first BWP by a first high-layer signaling;
receiving the common parameter of the first BWP through a first broadcast message or a second high-layer signaling;
receiving the second special parameter of the first BWP through the first high-layer signaling or the first broadcast message or the second high-layer signaling.

20. The method according to claim 17, wherein the receiving a first special parameter, a second special parameter and a common parameter configured by a network side device for a first BWP comprises:

receiving the first special parameter of the first BWP through a third high-layer signaling;
receiving the common parameter of the first BWP through a second broadcast message or a fourth high-layer signaling;
receiving the second special parameter through a third broadcast message or a fifth high-level signaling, wherein the second special parameter is associated with the first BWP;
wherein the third broadcast message and the second broadcast message are different broadcast messages; the fifth high-level signaling and the third high-level signaling are different high-level signaling, and the fifth high-level signaling and the fourth high-level signaling are different high-level signaling.

21. The method according to claim 20, further comprising:
receiving an association message through the high-level signaling or a MAC CE; wherein the association message is used to associate the second special parameter with the first BWP; the association message includes: an identifier of the first BWP and a configuration identifier corresponding to the second special parameter.

22. The method according to claim 20, wherein the second special parameter includes the configuration identifier corresponding to the second special parameter;
a configuration parameter of the first BWP applies for the configuration identifier corresponding to the second special parameter.

23. The method according to claim 17, wherein the second special parameter comprises at least one of the following:

a special parameter configuration identifier of broadcast/multicast;
a control resource set parameter of broadcast/multicast;
a search space parameter of broadcast/multicast;
a time domain scheduling parameter of broadcast/multicast;
a common resource bandwidth and location of broadcast/multicast; or
a common resource identifier of broadcasting multicast.

24. The method according to any one of claims 17-23, further comprising:

keeping same size of a control signaling of broadcast/multicast with a fallback control signaling of the common search space;
or,
reducing a number of control signaling lengths of unicast.

25. The method according to claim 24, wherein, in the case that the control signaling length of the broadcast/multicast is aligned with the fallback control signaling length of the common search space, the method further includes:
using part of fields of the fallback control signaling to carry part or all of frequency domain scheduling information of the broadcast/multicast.

26. The method according to claim 25, wherein a frequency domain scheduling information length of the broadcast/multicast is greater than a frequency domain scheduling information length in the fallback control signaling.

27. The method according to claim 25 or 26, further comprising:
using other fields in the fallback control command other than the part of fields to extend an indication range of the frequency domain scheduling information of the broadcast/multicast.

28. The method according to claim 24, further comprising:

deleting a DCI format corresponding to at least one control signaling length in unicast;
or,
deleting a DCI format corresponding to the control signaling length of broadcast/multicast, and using a control channel of unicast to schedule the broadcast/multicast data;
or,
selecting a control signaling length from the reduced numbers of control signaling lengths of unicast to align with the control signaling length of broadcast/multicast; wherein, the selected control signaling length is smaller than the control signaling length of broadcast/multicast.

29. The method according to claim 28, wherein the selecting a control signaling length from the reduced numbers of control signaling lengths of unicast to align with the control signaling length of broadcast/multicast comprises:
selecting a control signaling format of unicast closest to the control signaling length of broadcast/multicast, and performing zero padding until the length is the same as the control signaling length of the broadcast/multicast.

30. A network side device, including a memory, a transceiver, and a processor;
the memory is used to store computer programs; the transceiver is used to send and receive data under the control of the processor; the processor is used to read the computer programs in the memory and perform the following operations:

configuring a first special parameter, a second special parameter and a common parameter for a first BWP; wherein the first special parameter is for transmission of unicast data; the second special parameter is for transmission of broadcast/multicast data, the common parameter is used for the unicast data and the broadcast/multicast data transmission.

31. The network side device according to claim 30, wherein the first BWP comprises any one of the following:

a BWP corresponding to a first control resource set;
an initial BWP; or

a BWP configured through a high-layer signaling.

**32.** The network side device according to claim 30, wherein the processor is further configured to read the computer program in the memory and perform the following operations:

configuring the first special parameter of the first BWP by a first high-layer signaling;
configuring the common parameter of the first BWP through a first broadcast message or a second high-layer signaling;
configuring the second special parameter of the first BWP through the first high-layer signaling or the first broadcast message or the second high-layer signaling.

**33.** The network side device according to claim 30, wherein the processor is further configured to read the computer program in the memory and perform the following operations:

configuring the first special parameter of the first BWP through a third high-layer signaling;
configuring the common parameter of the first BWP through a second broadcast message or a fourth high-layer signaling;
configuring the second special parameter through a third broadcast message or a fifth high-level signaling, wherein the second special parameter is associated with the first BWP;
wherein the third broadcast message and the second broadcast message are different broadcast messages; the fifth high-level signaling and the third high-level signaling are different high-level signaling, and the fifth high-level signaling and the fourth high-level signaling are different high-level signaling.

**34.** The network side device according to claim 33, wherein the processor is further configured to read the computer program in the memory and perform the following operations:
sending an association message through the high-level signaling or a medium access control layer control element (MAC CE); wherein the association message is used to associate the second special parameter with the first BWP; the association message includes: an identifier of the first BWP and a configuration identifier corresponding to the second special parameter.

**35.** The network side device according to claim 33, wherein the second special parameter includes a configuration identifier corresponding to the second special parameter;
a configuration parameters of the first BWP include configuration identifiers corresponding to the second special parameters.

**36.** The network side device according to claim 30, wherein the second special parameter includes at least one of the following:

a special parameter configuration identifier of broadcast/multicast;
a control resource set parameter of broadcast/multicast;
a search space parameter of broadcast/multicast;
a time domain scheduling parameter of broadcast/multicast;
a common resource bandwidth and location of broadcast/multicast; or
a common resource identifier of broadcasting multicast.

**37.** The network side device according to any one of claims 30-36, wherein the processor is further configured to read a computer program in the memory and perform the following operations:

keeping same size of a control signaling of broadcast/multicast with a fallback control signaling of the common search space;
or,
reducing a number of control signaling lengths of unicast.

**38.** The network side device according to claim 37, wherein, in the case that the length of the control signaling of the broadcast/multicast is aligned with the length of the fallback control signaling of the common search space, the processor is further configured to read the computer program in memory and do the following:
using part of fields of the fallback control signaling to carry part or all of frequency domain scheduling information of the broadcast/multicast.

39. The network side device according to claim 37, wherein the processor is further configured to read the computer program in the memory and perform the following operations:

deleting a DCI format corresponding to at least one control signaling length in unicast;
or,
deleting a DCI format corresponding to the control signaling length of broadcast/multicast, and using a control channel of unicast to schedule the broadcast/multicast data;
or,
selecting a control signaling length from the reduced numbers of control signaling lengths of unicast to align with the control signaling length of broadcast/multicast; wherein, the selected control signaling length is smaller than the control signaling length of broadcast/multicast.

40. A BWP configuration device, applied to a network side device, comprising:

a configuration unit, configured to configure a first special parameter, a second special parameter and a common parameter for a first BWP;
wherein the first special parameter is for transmission of unicast data; the second special parameter is for transmission of broadcast/multicast data, the common parameter is used for the unicast data and the broadcast/multicast data transmission.

41. A terminal, including a memory, a transceiver, and a processor;
the memory is used to store computer programs; the transceiver is used to send and receive data under the control of the processor; the processor is used to read the computer programs in the memory and perform the following operations:

receiving a first special parameter, a second special parameter and a common parameter configured by a network side device for a first BWP;
wherein the first special parameter is for transmission of unicast data; the second special parameter is for transmission of broadcast/multicast data, the common parameter is used for the unicast data and the broadcast/multicast data transmission.

42. The terminal according to claim 41, wherein the first BWP comprises any one of the following:

a BWP corresponding to a first control resource set;
an initial BWP; or
a BWP configured through a high-layer signaling.

43. The terminal according to claim 41, wherein the processor is further configured to read the computer program in the memory and perform the following operations:

receiving the first special parameter of the first BWP by a first high-layer signaling;
receiving the common parameter of the first BWP through a first broadcast message or a second high-layer signaling;
receiving the second special parameter of the first BWP through the first high-layer signaling or the first broadcast message or the second high-layer signaling.

44. The terminal according to claim 41, wherein the processor is further configured to read the computer program in the memory and perform the following operations:

receiving the first special parameter of the first BWP through a third high-layer signaling;
receiving the common parameter of the first BWP through a second broadcast message or a fourth high-layer signaling;
receiving the second special parameter through a third broadcast message or a fifth high-level signaling, wherein the second special parameter is associated with the first BWP;
wherein the third broadcast message and the second broadcast message are different broadcast messages; the fifth high-level signaling and the third high-level signaling are different high-level signaling, and the fifth high-level signaling and the fourth high-level signaling are different high-level signaling.

**45.** The terminal according to claim 44, wherein the processor is further configured to read the computer program in the memory and perform the following operations:
receiving an association message through the high-level signaling or a MAC CE; wherein the association message is used to associate the second special parameter with the first BWP; the association message includes: an identifier of the first BWP and a configuration identifier corresponding to the second special parameter.

**46.** The terminal according to claim 44, wherein the second special parameter includes a configuration identifier corresponding to the second special parameter;
a configuration parameters of the first BWP include configuration identifiers corresponding to the second special parameters.

**47.** The terminal according to claim 41, wherein the second special parameter comprises at least one of the following:

a special parameter configuration identifier of broadcast/multicast;
a control resource set parameter of broadcast/multicast;
a search space parameter of broadcast/multicast;
a time domain scheduling parameter of broadcast/multicast;
a common resource bandwidth and location of broadcast/multicast; or
a common resource identifier of broadcasting multicast.

**48.** The terminal according to any one of claims 41-47, wherein the processor is further configured to read a computer program in the memory and perform the following operations:

keeping same size of a control signaling of broadcast/multicast with a fallback control signaling of the common search space;
or,
reducing a number of control signaling lengths of unicast.

**49.** The terminal according to claim 48, wherein, in the case where the control signaling length of the broadcast/multicast is aligned with the fallback control signaling length of the common search space, the processor is further configured to read the memory computer program in and do the following:
using part of fields of the fallback control signaling to carry part or all of frequency domain scheduling information of the broadcast/multicast.

**50.** The terminal according to claim 48, wherein the processor is further configured to read the computer program in the memory and perform the following operations:

deleting a DCI format corresponding to at least one control signaling length in unicast;
or,
deleting a DCI format corresponding to the control signaling length of broadcast/multicast, and using a control channel of unicast to schedule the broadcast/multicast data;
or,
selecting a control signaling length from the reduced numbers of control signaling lengths of unicast to align with the control signaling length of broadcast/multicast; wherein, the selected control signaling length is smaller than the control signaling length of broadcast/multicast.

**51.** A BWP configuration device, applied to a terminal, comprising:

a configuration receiving unit, configured to receive a first special parameter, a second special parameter, and a common parameter configured by a network side device for a first BWP;
wherein the first special parameter is for transmission of unicast data; the second special parameter is for transmission of broadcast/multicast data, the common parameter is used for the unicast data and the broadcast/multicast data transmission.

**52.** A processor-readable storage medium, storing a computer program, wherein the computer program is executed by the processor to implement the steps of the BWP configuration method according to any one of claims 1 to 16; or the steps of the BWP configuration method according to any one of claims 17 to 29.

12

FIG. 1

configuring a first dedicated parameter, a second dedicated parameter and a common parameter for a first BWP; wherein the first dedicated parameter is used to indicate transmission of unicast data; the second dedicated parameter is used to indicate transmission of broadcast multicast data, the unicast data and the broadcast multicast data share the common parameter

201

FIG. 2

receiving a first dedicated parameter, a second dedicated parameter and a common parameter configured by a network side device for a first BWP; wherein the first dedicated parameter is used to indicate transmission of unicast data; the second dedicated parameter is used to indicate transmission of broadcast multicast data, the unicast data and the broadcast multicast data share the common parameter

301

FIG. 3

**FIG. 4**

**FIG. 5**

**FIG. 6**

**FIG. 7**

**FIG. 8**

## INTERNATIONAL SEARCH REPORT

| International application No. |
|---|
| **PCT/CN2021/120195** |

**A.     CLASSIFICATION OF SUBJECT MATTER**

H04W 4/06(2009.01)i;   H04W 72/04(2009.01)i

According to International Patent Classification (IPC) or to both national classification and IPC

**B.     FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; SIPOABS; DWPI; USTXT; WOTXT; EPTXT; CNKI; 3GPP: 带宽部分, 单播, 广播, 多播, 组播, 控制信令, bwp, band width part, bandwidth part, unicast, uni-cast, broadcast, multicast, multi-cast, groupcast, mbs, dci, length, size

**C.     DOCUMENTS CONSIDERED TO BE RELEVANT**

| Category* | Citation of document, with indication, where appropriate, of the relevant passages | Relevant to claim No. |
|---|---|---|
| X | HUAWEI et al. ""Resource Configuration and Group Scheduling for RRC_CONNECTED UEs"" *3GPP TSG RAN WG1 Meeting #102-e R1-2005249*, 08 August 2020 (2020-08-08), sections 1-4 | 1-52 |
| X | MODERATOR CMCC. ""Summary#2 on NR Multicast and Broadcast Services"" *3GPP TSG RAN WG1 #102-e R1-2007235*, 27 August 2020 (2020-08-27), pp. 37-42 | 1-52 |
| X | MODERATOR CMCC. ""Summary#3 on NR Multicast and Broadcast Services"" *3GPP TSG RAN WG1 #102-e R1-2007341*, 29 August 2020 (2020-08-29), pp. 37-42 | 1-52 |
| A | CATT. ""Discussion on Basic Functions for Broadcast/Multicast for RRC_IDLE/ RRC_INACTIVE UEs"" *3GPP TSG RAN WG1 Meeting #102-e R1-2005695*, 08 August 2020 (2020-08-08), entire document | 1-52 |
| A | CN 111132324 A (HUAWEI TECHNOLOGIES CO., LTD.) 08 May 2020 (2020-05-08) entire document | 1-52 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2021** | **03 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/120195**

| Patent document cited in search report | | | Publication date (day/month/year) | Patent family member(s) | | | Publication date (day/month/year) |
|---|---|---|---|---|---|---|---|
| CN | 111132324 | A | 08 May 2020 | WO | 2020088417 | A1 | 07 May 2020 |

Form PCT/ISA/210 (patent family annex) (January 2015)

**REFERENCES CITED IN THE DESCRIPTION**

**Patent documents cited in the description**

- CN 202011057156